# EUROPEAN PATENT APPLICATION

(11) **EP 4 579 331 A1**
(43) Date of publication of application: **02.07.2025**
(21) Application number: 24756078.2
(22) Date of filing: 04.02.2024
(51) Int. Cl.: G03B 9/06, H02K 11/33

(54) **VARIABLE APERTURE, LENS ASSEMBLY, AND ELECTRONIC DEVICE**

(30) Priority: 15.02.2023 CN 202310155521
(71) Applicant: Huawei Technologies Co., Ltd., Shenzhen, Guangdong 518129 (CN)
(72) Inventor: LI, Zhangcheng, Shenzhen, Guangdong 518129 (CN); FENG, Minyang, Shenzhen, Guangdong 518129 (CN); LIU, Bin, Shenzhen, Guangdong 518129 (CN); LI, Sikun, Shenzhen, Guangdong 518129 (CN)
(74) Representative: Epping - Hermann - Fischer
(86) International application number: PCT/CN2024/075840
(87) International publication number: WO 2024/169704

(57) **Abstract**

A variable-aperture stop, a lens assembly, and an electronic device are disclosed. The variable-aperture stop (1) includes a stationary base (110), a rotating bracket (13), a first circuit board (21), a second circuit board (22), a first drive mechanism (19), a second drive mechanism (20), and a plurality of blades (15). The rotating bracket (13) is rotatably connected to the stationary base (110). A part of the blade (15) is connected to the stationary base (110). A part of the blade (15) is connected to the rotating bracket (13). The plurality of blades (15) together enclose an aperture hole (1a). The first circuit board (21) and the second circuit board (22) are fastened to a peripheral surface of the stationary base (110) at a spacing. The first drive mechanism (19) is electrically connected to the first circuit board (21). The second drive mechanism (20) is electrically connected to the second circuit board (22). The first drive mechanism (19) and the second drive mechanism (20) are configured to drive the rotating bracket (13) to rotate relative to the stationary base (110). The rotating bracket (13) drives the plurality of blades (15) to rotate, to change an aperture of the aperture hole (1a). The variable-aperture stop (1) has low assembly difficulty and high structural consistency, so that mass production can be implemented.

## Description

This application claims priority to Chinese Patent Application No. 202310155521.3, filed with the China National Intellectual Property Administration on February 15, 2023 and entitled "VARIABLE-APERTURE STOP, LENS ASSEMBLY, AND ELECTRONIC DEVICE", which is incorporated herein by reference in its entirety.

### TECHNICAL FIELD

This application relates to the field of camera technologies, and in particular, to a variable-aperture stop, a lens assembly, and an electronic device.

### BACKGROUND

Currently, most variable-aperture stops on the market are electromagnetic variable-aperture stops. An electromagnetic variable-aperture stop provides a driving force through coupling between a plurality of groups of energized coils and magnets, to drive blades to rotate to change an aperture. However, a plurality of coils usually need to be attached to one flexible circuit board. Therefore, the flexible circuit board usually has a large length and a large area. In addition, the flexible circuit board further needs to be fastened to an outer surface of a stationary piece in a full-circle encircling manner through manual assembly. On one hand, difficulty in assembling the variable-aperture stop greatly increases, and production efficiency is low. This is not conducive to mass production of a product. On the other hand, because the flexible circuit board is fastened to the outer surface of the stationary piece in an encircling manner, it is difficult to ensure consistency of the flexible circuit board in terms of a shape, positioning, bonding strength, and other aspects, and a yield of the variable-aperture stop is low.

### SUMMARY

Implementations of this application provide a variable-aperture stop, a lens assembly including the variable-aperture stop, and an electronic device including the lens module, to obtain a variable-aperture stop that has low assembly difficulty and high structural consistency and that supports mass production.

According to a first aspect, a variable-aperture stop is provided. The variable-aperture stop includes a stationary base, a rotating bracket, a first circuit board, a second circuit board, a first drive mechanism, a second drive mechanism, and a plurality of blades. The rotating bracket is rotatably connected to the stationary base. A part of the blade is connected to the stationary base. A part of the blade is connected to the rotating bracket. The plurality of blades together enclose an aperture hole. The first circuit board and the second circuit board are fastened to a peripheral surface of the stationary base at a spacing. The first drive mechanism is electrically connected to the first circuit board. The second drive mechanism is electrically connected to the second circuit board. The first drive mechanism and the second drive mechanism are configured to drive the rotating bracket to rotate relative to the stationary base. The rotating bracket drives the plurality of blades to rotate, to change an aperture of the aperture hole.

It can be understood that, compared with a conventional variable-aperture stop in which a long flexible circuit board is fastened to an outer surface of a stationary base in an encircling manner, in the variable-aperture stop in this application, two independent circuit boards (to be specific, the first circuit board and the second circuit board) are fastened to the peripheral surface of the stationary base at a spacing, the first drive mechanism is electrically connected to the first circuit board, and the second drive mechanism is electrically connected to the second circuit board, so that the two independent circuit boards can simultaneously control the two drive mechanisms to operate. In this way, the rotating bracket is driven to rotate relative to the stationary base, and the plurality of blades are driven to rotate to adjust a size of the aperture hole, so that the aperture of the aperture hole of the variable-aperture stop continuously changes between a plurality of levels. On one hand, with this circuit arrangement, difficulty in assembling circuit boards (to be specific, the first circuit board and the second circuit board) in the variable-aperture stop is greatly reduced. This helps ensure consistency of the circuit boards in terms of shapes, positioning, and bonding strength. In addition, production efficiency can be further improved. This facilitates mass production of a product. On the other hand, areas of the circuit boards in the variable-aperture stop in this application are much less than an area of a circuit board in the conventional variable-aperture stop. This greatly reduces manufacturing costs of the variable-aperture stop.

In a possible implementation, areas occupied by the first circuit board and the second circuit board on the peripheral surface of the stationary base are less than half of an area of the peripheral surface of the stationary base. In this way, areas of the first circuit board and the second circuit board are small. This greatly reduces difficulty in assembling the circuit boards, helps ensure consistency of the circuit boards in terms of shapes, positioning, and bonding strength, and further reduces manufacturing costs of the variable-aperture stop.

In a possible implementation, the peripheral surface of the stationary base includes a first plane, a first curved surface, a second plane, and a second curved surface that are sequentially connected. The first circuit board is fastened to the first plane. The second circuit board is fastened to the second plane. Areas occupied by the first circuit board and the second circuit board on the first curved surface and the second curved surface are less than half of a total area of the first curved surface and the second curved surface.

It can be understood that, compared with a manner of fastening the first circuit board and the second circuit board to curved surfaces, in a manner of fastening the first circuit board and the second circuit board to planes, difficulty in assembling the circuit boards can be greatly reduced. This helps ensure consistency of the circuit boards in terms of shapes, positioning, and bonding strength. In addition, areas of the first circuit board and the second circuit board are small. This helps reduce manufacturing costs of the variable-aperture stop.

In a possible implementation, the first drive mechanism includes a first coil and a first magnet. The first coil is electrically connected to the first circuit board. The second drive mechanism includes a second coil and a second magnet. The second coil is electrically connected to the second circuit board. The first magnet and the second magnet are fastened to the rotating bracket at a spacing. The first magnet is disposed opposite to the first coil, and the second magnet is disposed opposite to the second coil. In this way, when the first coil is energized, the first magnet is subject to an acting force, and the first magnet can drive the rotating bracket to rotate. When the second coil is energized, the second magnet is subject to an acting force, and the second magnet can drive the rotating bracket to rotate.

In a possible implementation, the variable-aperture stop further includes an electrical connector. The electrical connector is electrically connected between the first circuit board and the second circuit board. An output end of the second coil and an input end of the second coil are electrically connected to the first circuit board through the second circuit board and the electrical connector.

It can be understood that the electrical connector is disposed to electrically connect the second coil to the first circuit board, so that the variable-aperture stop can control both a current passing through the first coil and a current passing through the second coil. In this way, the first magnet and the second magnet are separately subject to acting forces, and jointly drive the rotating bracket to rotate. In addition, the first coil, the first magnet, the second coil, and the second magnet cooperate with each other. This helps increase a driving force of the variable-aperture stop and improve operation efficiency.

In a possible implementation, the electrical connector is a metal terminal. The electrical connector includes a first electrical sub-connector and a second electrical sub-connector. The first electrical sub-connector is electrically connected between the first circuit board and the second circuit board. The second electrical sub-connector is electrically connected between the first circuit board and the second circuit board. The output end of the second coil is electrically connected to the first circuit board through the second circuit board and the first electrical sub-connector. The input end of the second coil is electrically connected to the first circuit board through the second circuit board and the second electrical sub-connector. In this way, the first circuit board can be electrically connected to the second circuit board through simple electrical connection arrangement. This helps reduce difficulty in assembling the variable-aperture stop and reduce manufacturing costs.

In a possible implementation, the variable-aperture stop further includes a cover. The cover is fastened to a top surface of the stationary base. At least a part of the first electrical sub-connector and at least a part of the second electrical sub-connector are embedded in the cover.

It can be understood that at least a part of the first electrical sub-connector and at least a part of the second electrical sub-connector are embedded in the cover, so that a problem such as a short circuit between the first electrical sub-connector and the second electrical sub-connector can be effectively avoided. In addition, the first electrical sub-connector and the second electrical sub-connector may be integrated with the cover by using an injection molding technique, to reduce manufacturing costs. In addition, space of the cover may be used for the first electrical sub-connector and the second electrical sub-connector, so that the first electrical sub-connector and the second electrical sub-connector do not cause an additional increase in a size of the variable-aperture stop. In this way, a structure of the variable-aperture stop is more compact.

In a possible implementation, the cover is made of a plastic material. In this way, compared with a cover made of a metal material, the cover made of the plastic material in this application can help effectively reduce manufacturing costs, to implement mass production.

In a possible implementation, the cover includes a first part and a second part. The first part is fastened to a top surface of the stationary base. The first part includes a plurality of fastening slots that are spaced apart. The plurality of fastening slots are arranged around a periphery of the first part. The second part includes a body portion and a plurality of fastening portions that are spaced apart. The plurality of fastening portions are all connected to edges of the body portion and are arranged around the body portion. The body portion of the second part is embedded in the first part, and the plurality of fastening portions of the second part are located in the plurality of fastening slots of the first part in a one-to-one correspondence. The first electrical sub-connector and the second electrical sub-connector are both embedded in the first part, and are spaced away from the second part.

It can be understood that, in this application, the cover is disposed as the first part and the second part, the body portion of the second part is embedded in the first part, and the plurality of fastening portions of the second part are disposed in the plurality of fastening slots of the first part. In this way, when the cover is fastened to the stationary base by using a hot riveting technique, a part of the stationary base in the fastening slot may be fastened to the fastening portion of the second part, to avoid melting and deformation of the first part of the cover due to high temperature during hot riveting, and avoid a structural defect.

In a possible implementation, the first part is made of a plastic material, and the second part is made of a metal material. In this way, when the cover is fastened to the stationary base by using a hot riveting technique, a part of the stationary base in the fastening slot may be connected to a surface, to be specific, a metal surface, of the fastening portion of the second part, to effectively avoid melting and deformation of the first part of the cover due to high temperature, and avoid a structural defect.

In a possible implementation, the first circuit board includes a main body portion, a connection portion, a first extension portion, and a second extension portion. The main body portion is connected to the connection portion. The main body portion is fastened to the peripheral surface of the stationary base. The connection portion is fastened to a bottom surface of the stationary base. The first extension portion is connected to the connection portion and extends out relative to the stationary base. The second extension portion is connected to the connection portion and extends out relative to the stationary base. The first extension portion and the second extension portion are configured to electrically connect to an external device. In this way, bottom space of the stationary base can be used for the first circuit board, so that the first extension portion and the second extension portion extend out from the bottom of the stationary base and are directly electrically connected to a device outside the variable-aperture stop. This helps simplify circuit arrangement of the variable-aperture stop, so that assembly of the variable-aperture stop is simpler.

In a possible implementation, the electrical connector is a circuit board, and the electrical connector is fastened to a bottom surface of the stationary base. In this way, the first circuit board can be electrically connected to the second circuit board through simple electrical connection arrangement. This helps reduce difficulty in assembling the variable-aperture stop and reduce manufacturing costs.

In a possible implementation, the electrical connector includes a first pin and a second pin. The first pin and the second pin both extend out relative to the stationary base. The first pin and the second pin are configured to electrically connect to an external device. In this way, bottom space of the stationary base can be used for the electrical connector, so that the first pin and the second pin extend out from the bottom of the stationary base and are directly electrically connected to a device outside the variable-aperture stop. This helps simplify circuit arrangement of the variable-aperture stop, so that assembly of the variable-aperture stop is simpler.

In a possible implementation, the variable-aperture stop further includes a cover. The cover includes a first part and a second part. The first part is fastened to a top surface of the stationary base. The first part includes a plurality of fastening slots that are spaced apart. The plurality of fastening slots are arranged around a periphery of the first part. The second part includes a body portion and a plurality of fastening portions that are spaced apart. The plurality of fastening portions are all connected to edges of the body portion and are arranged around the body portion. The body portion of the second part is embedded in the first part. The plurality of fastening portions of the second part are located in the plurality of fastening slots of the first part in a one-to-one correspondence.

It can be understood that, in this application, the cover is disposed as the first part and the second part, the body portion of the second part is embedded in the first part, and the plurality of fastening portions of the second part are disposed in the plurality of fastening slots of the first part. In this way, when the cover is fastened to the stationary base by using a hot riveting technique, a part of the stationary base in the fastening slot may be fastened to the fastening portion of the second part, to avoid melting and deformation of the first part of the cover due to high temperature during hot riveting, and avoid a structural defect.

In a possible implementation, the variable-aperture stop further includes a magnetic-attractive piece. The magnetic-attractive piece is fastened to the second circuit board. The magnetic-attractive piece generates a first attraction force along a first direction and a second attraction force along a second direction for the second magnet. The first direction is a thickness direction of the variable-aperture stop. The second direction is a radial direction along which the second magnet of the variable-aperture stop is located.

It can be understood that, in this application, one magnetic-attractive piece is disposed to generate both the first attraction force along the first direction and the second attraction force along the second direction for the second magnet. This can effectively avoid displacement or shaking of the rotating bracket in the stationary base along the first direction under impact of a gravity pillarure difference during operation of the variable-aperture stop, and can also avoid displacement or shaking of the rotating bracket in the stationary base along the second direction under impact of a gap tolerance between the rotating bracket and the stationary base.

In a possible implementation, a part of a projection of the magnetic-attractive piece on a reference plane coincides with a projection of the second magnet on the reference plane, and a part of the projection of the magnetic-attractive piece on the reference plane is located on a bottom side of the projection of the second magnet on the reference plane. The reference plane is parallel to an optical-axis direction of the variable-aperture stop.

In this way, relative positions of the magnetic-attractive piece and the second magnet are simply changed, so that only one magnetic-attractive piece needs to be disposed in the variable-aperture stop to generate both the first attraction force along the first direction and the second attraction force along the second direction for the second magnet. This saves internal space of the variable-aperture stop and further helps reduce costs.

In a possible implementation, the magnetic-attractive piece includes a horizontal part and a vertical part. The vertical part is connected to a bottom surface of the horizontal part. A projection of the horizontal part on the reference plane at least partially overlaps with the projection of the second magnet on the reference plane. A projection of the vertical part on the reference plane is at least partially located on the bottom side of the projection of the second magnet on the reference plane.

In this way, a shape of the magnetic-attractive piece and relative positions of the magnetic-attractive piece and the second magnet are simply changed, so that only one magnetic-attractive piece needs to be disposed in the variable-aperture stop to generate both the first attraction force along the first direction and the second attraction force along the second direction for the second magnet. This saves internal space of the variable-aperture stop and further helps reduce costs.

In a possible implementation, the variable-aperture stop further includes a plurality of balls. The plurality of balls are all rotatably connected to the stationary base and rollably connected to the rotating bracket. Compared with a manner in which the rotating bracket is directly rotatably connected to the stationary base, in this application, the rotating bracket is connected to the stationary base through the balls. The balls can reduce friction between the rotating bracket and the stationary base, to reduce driving forces of the first drive mechanism and the second drive mechanism for driving the rotating bracket to rotate. This helps implement energy-saving arrangement for the variable-aperture stop.

In a possible implementation, the variable-aperture stop further includes at least two balls. The plurality of balls are all rotatably connected to the stationary base and rollably connected to the rotating bracket. The plurality of balls are all located on a side, close to the magnetic-attractive piece, of the rotating bracket. In this way, the balls are disposed on the side, close to the magnetic-attractive piece, of the rotating bracket, so that only a small quantity of balls need to be disposed in the variable-aperture stop to implement rotation between the rotating bracket and the stationary base. This can effectively reduce manufacturing costs of the variable-aperture stop, and can also reduce a risk of position limiting and unsmoothness that occur in a conventional variable-aperture stop provided with a plurality of balls.

According to a second aspect, a lens assembly is provided. The lens assembly includes a camera module and the foregoing variable-aperture stop. The variable-aperture stop is located on a light entrance side of the camera module. The variable-aperture stop is configured to adjust luminous flux of ambient light that enters the camera module. It can be understood that, in this application, the variable-aperture stop has low assembly difficulty and high structural consistency. When the variable-aperture stop is used in the lens assembly, mass production of the lens assembly can be implemented.

According to a third aspect, an electronic device is provided. The electronic device includes a device housing and the foregoing lens assembly. The lens assembly is disposed on an inner side of the device housing. It can be understood that, when the lens assembly is used in the electronic device, mass production of the electronic device can also be implemented.

### BRIEF DESCRIPTION OF DRAWINGS

To describe technical solutions in implementations of this application or in the background more clearly, the following describes accompanying drawings used in implementations of this application or in the background.
FIG. 1 is a diagram of a structure of an electronic device according to an implementation of this application;
FIG. 2 is a partial schematic cross-sectional view of an electronic device shown in FIG. 1 at a line A-A according to an implementation;
FIG. 3 is a diagram of a structure of a variable-aperture stop shown in FIG. 2 according to an implementation;
FIG. 4 is a schematic exploded view of a structure of a variable-aperture stop shown in FIG. 3 according to an implementation;
FIG. 5 is a diagram of a structure of a base of a variable-aperture stop shown in FIG. 4 according to an implementation;
FIG. 6 is a diagram of a structure of a base shown in FIG. 5 from another perspective;
FIG. 7 is a diagram of a structure of a stationary bracket of a variable-aperture stop shown in FIG. 4 according to an implementation;
FIG. 8 is a diagram of a structure of a stationary bracket shown in FIG. 7 from a different perspective;
FIG. 9a is a diagram of a structure of a base and a stationary bracket of a variable-aperture stop shown in FIG. 4 according to an implementation;
FIG. 9b is a diagram of a structure of a structure shown in FIG. 9a from another perspective;
FIG. 10a is a partial cross-sectional view of a variable-aperture stop shown in FIG. 3 at a line B-B according to an implementation;
FIG. 10b is a partial cross-sectional view of a variable-aperture stop shown in FIG. 3 at a line C-C according to an implementation;
FIG. 11 is a diagram of a structure of a stationary bracket and a first magnet of a variable-aperture stop shown in FIG. 3 according to an implementation;
FIG. 12 is a diagram of a structure of a stationary bracket and a second magnet of a variable-aperture stop shown in FIG. 3 according to an implementation;
FIG. 13 is a partial cross-sectional view of a variable-aperture stop shown in FIG. 3 at a line C-C according to an implementation;
FIG. 14 is a partial cross-sectional view of a variable-aperture stop shown in FIG. 3 at a line B-B according to an implementation;
FIG. 15 is a diagram of a structure of a first circuit board, a first coil, and a drive chip of a variable-aperture stop shown in FIG. 4 according to an implementation;
FIG. 16 is a diagram of a structure of a second circuit board, a second coil, a magnetic-attractive piece, and a structural reinforcing plate of a variable-aperture stop shown in FIG. 4 according to an implementation;
FIG. 17 is a diagram of a structure of a structure shown in FIG. 16 from another perspective;
FIG. 18 is a partial cross-sectional view of a variable-aperture stop shown in FIG. 3 at a line B-B according to an implementation;
FIG. 19a is a diagram of a structure of a structure shown in FIG. 18 from another perspective;
FIG. 19b is a diagram of a structure of a structure shown in FIG. 18 from still another perspective;
FIG. 20 is a partial cross-sectional view of a variable-aperture stop shown in FIG. 3 at a line D-D according to an implementation;
FIG. 21 is a diagram of a partial structure of a variable-aperture stop shown in FIG. 3;
FIG. 22 is a partial cross-sectional view of a variable-aperture stop shown in FIG. 3 at a line B-B according to an implementation;
FIG. 23 is a diagram of a partial structure of a variable-aperture stop shown in FIG. 3;
FIG. 24 is a partial cross-sectional view of a variable-aperture stop shown in FIG. 3 at a line B-B according to an implementation;
FIG. 25 is a diagram of a structure of a cover and an electrical connector of a variable-aperture stop shown in FIG. 4 according to an implementation;
FIG. 26 is a diagram of a structure of a structure shown in FIG. 25 from another perspective;
FIG. 27 is a diagram of a partial structure of a variable-aperture stop shown in FIG. 3;
FIG. 28 is a diagram of a structure of a structure shown in FIG. 27 from another perspective;
FIG. 29 is a cross-sectional view of a variable-aperture stop shown in FIG. 3 at a line B-B according to an implementation;
FIG. 30 is a diagram of a structure of a variable-aperture stop shown in FIG. 3 according to another implementation;
FIG. 31 is a schematic exploded view of a structure of a variable-aperture stop shown in FIG. 30 according to an implementation;
FIG. 32 is a diagram of a structure of a variable-aperture stop shown in FIG. 30 from another perspective;
FIG. 33 is a diagram of a partial structure of a variable-aperture stop shown in FIG. 30;
FIG. 34 is a diagram of a structure of a partial structure of a variable-aperture stop shown in FIG. 33 according to another implementation;
FIG. 35 is a diagram of a structure of a structure shown in FIG. 34 from another perspective;
FIG. 36 is a diagram of a structure of a variable-aperture stop shown in FIG. 30 according to another implementation;
FIG. 37 is a partial schematic exploded view of a structure of a variable-aperture stop shown in FIG. 36; and
FIG. 38 is a diagram of a structure of a cover of a variable-aperture stop shown in FIG. 36 according to an implementation.

### DESCRIPTION OF EMBODIMENTS

The following describes implementations of this application with reference to accompanying drawings in implementations of this application.

In descriptions of implementations of this application, it should be noted that the terms "mounting" and "connection" should be understood in a broad sense, unless otherwise specified and limited. For example, the "connection" may be a detachable connection or a non-detachable connection, or may be a direct connection or a connection through an intermediate medium. "Fastening" means that two parts are connected to each other and a relative position relationship remains unchanged after the two parts are connected to each other. "Rotatable connection" means that two parts are connected to each other and can rotate relative to each other after being connected to each other. "Rollable connection" means that two parts are connected to each other and can roll relative to each other after being connected to each other. Orientation terms mentioned in implementations of this application, for example, "above", "below", "inner", and "outer", merely indicate directions with reference to accompanying drawings. Therefore, the orientation terms are used to better and more clearly describe and understand implementations of this application, but not to indicate or imply that a specified apparatus or element needs to have a specific orientation or be constructed or operated in a specific orientation. Therefore, this cannot be construed as a limitation on implementations of this application. "A plurality of" means at least two.

In implementations of this application, the terms "first", "second", "third", and "fourth" are merely intended for a purpose of description, and shall not be understood as an indication or implication of relative importance or an implicit indication of a quantity of indicated technical features. Therefore, a feature limited by "first", "second", "third", or "fourth" may explicitly or implicitly include one or more features.

In implementations of this application, "and/or" describes only an association relationship between associated objects and indicates that three relationships may exist. For example, A and/or B may indicate the following three cases: Only A exists, both A and B exist, and only B exists. In addition, the character "/" in this specification usually indicates an "or" relationship between the associated objects.

Reference to "an implementation", "some implementations", or the like described in this specification means that one or more implementations of this application include a specific feature, structure, or characteristic described with reference to the implementation. Therefore, statements such as "in an implementation", "in some implementations", and "in other implementations" that appear at different places in this specification do not necessarily mean referring to a same implementation. Instead, the statements mean "one or more but not all of implementations", unless otherwise specifically emphasized in another manner. The terms "include", "have", and their variants all mean "including but not limited to", unless otherwise specifically emphasized in another manner.

It can be understood that specific implementations described herein are merely intended to explain a related invention, but not to limit the invention. In addition, it should be further noted that, for ease of description, only a part related to the invention is shown in accompanying drawings.

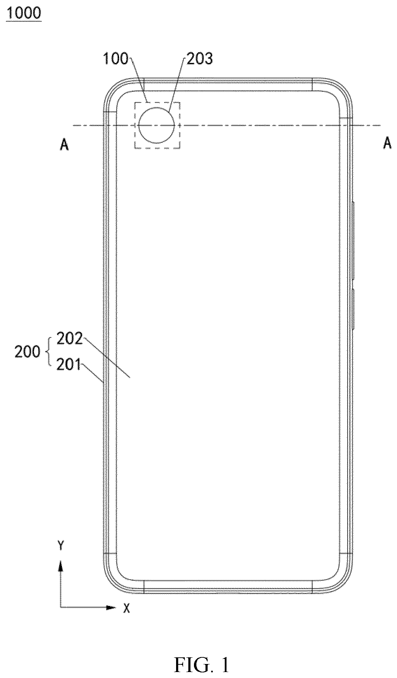

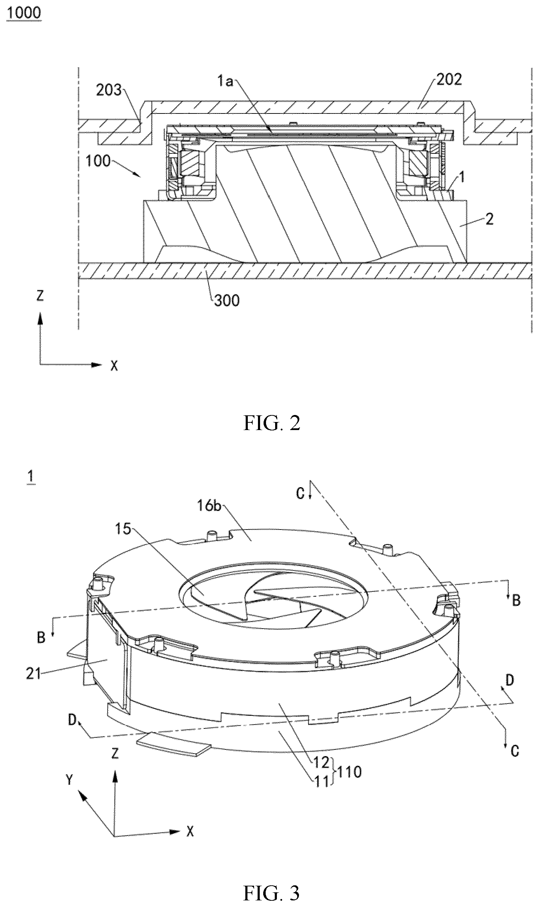

FIG. 1 is a diagram of a structure of an electronic device 1000 according to an implementation of this application. FIG. 2 is a partial schematic cross-sectional view of the electronic device 1000 shown in FIG. 1 at a line A-A according to an implementation.

As shown in FIG. 1, the electronic device 1000 may be a device with a camera function, for example, a mobile phone, a tablet personal computer (tablet personal computer), a laptop computer (laptop computer), a personal digital assistant (personal digital assistant, PDA), a camera, a personal computer, a notebook computer, a vehicle-mounted device, a wearable device, augmented reality (augmented reality, AR) glasses, an AR helmet, virtual reality (virtual reality, VR) glasses, or a VR helmet. The electronic device 1000 shown in FIG. 1 is described by using a mobile phone as an example.

As shown in FIG. 1 and FIG. 2, the electronic device 1000 may include a lens assembly 100, a device housing 200, and a screen 300. It should be noted that FIG. 1, FIG. 2, and related accompanying drawings in the following descriptions merely show some components included in the electronic device 1000 as an example. Actual shapes, actual sizes, actual positions, and actual structures of the components are not limited by FIG. 1, FIG. 2, or the accompanying drawings in the following descriptions. In addition, when the electronic device 1000 is a device in another form, the electronic device 1000 may alternatively not include the screen 300.

For ease of description, a width direction of the electronic device 1000 is defined as an X axis, a length direction of the electronic device 1000 is a Y axis, and a thickness direction of the electronic device 1000 is a Z axis. It can be understood that a coordinate system of the electronic device 1000 may be flexibly set according to a specific actual requirement.

As shown in FIG. 1 and FIG. 2, the device housing 200 may include a frame 201 and a rear cover 202. The rear cover 202 is fastened to the frame 201. For example, the rear cover 202 may be fastened to the frame 201 through bonding. The rear cover 202 and the frame 201 may alternatively be an integrated structure. In other words, the rear cover 202 and the frame 201 are a whole structure.

In addition, the screen 300 may be located on a side, away from the rear cover 202, of the frame 201. In this case, the screen and the rear cover 202 are respectively located on two sides of the frame 201. The screen 300, the frame 201, and the rear cover 202 together enclose an inside of the electronic device 1000. The inside of the electronic device 1000 may be used for placing a component, for example, a battery, a receiver, or a microphone, of the electronic device 1000. The screen 300 may be a flat screen or a curved screen.

For example, the lens assembly 100 may be located in the electronic device 1000. The lens assembly 100 may be fastened to a side, facing the rear cover 202, of the screen 300. The rear cover 202 may be provided with a light through hole 203. A shape of the light through hole 203 is not limited to a circular shape shown in FIG. 1. The light through hole 203 is used for communication between the inside of the electronic device 1000 and an outside of the electronic device 1000. Light outside the electronic device 1000 may enter the electronic device 1000 through the light through hole 203. The lens assembly 100 may capture ambient light that enters the electronic device 1000.

As shown in FIG. 2, the lens assembly 100 may include a variable-aperture stop 1 and a camera module 2. The variable-aperture stop 1 may be located on a light entrance side of the camera module 2. The variable-aperture stop 1 may have an aperture hole 1a. A size of the aperture hole 1a is automatically adjustable. Ambient light may enter the camera module 2 through the aperture hole 1a of the variable-aperture stop 1. It can be understood that a connection relationship between the variable-aperture stop 1 and the camera module 2 is not specifically limited in this application. In addition, a specific structure of the variable-aperture stop 1 is described in detail below with reference to related accompanying drawings. Details are not described herein.

For example, the camera module 2 may include a lens (not shown in the figure) and a motor (not shown in the figure). The motor may be a voice coil motor or a shape memory alloy (shape memory alloy, SMA) motor. It should be understood that a specific structure of the motor is not limited in this application. The lens may be disposed on the motor. The motor is configured to drive the lens to move along an optical-axis direction (namely, a Z-axis direction) of the lens assembly 100. The variable-aperture stop 1 may be fastened to the lens and located on a light entrance side of the lens. In this case, ambient light may enter the lens through the aperture hole 1a of the variable-aperture stop 1.

It can be understood that the camera module 2 may be a camera module that directly captures light along the Z-axis direction, or may be a periscope camera module that converts light along the Z-axis direction into light propagated along an X-Y plane and captures the light.

The foregoing specifically describes structures of the electronic device 1000 and the lens assembly 100. The following specifically describes a structure of the variable-aperture stop 1 with reference to related accompanying drawings.

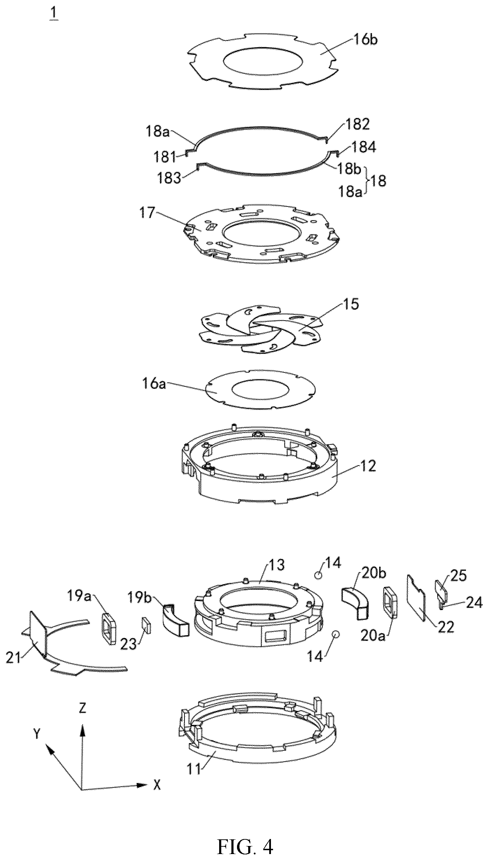

FIG. 3 is a diagram of a structure of the variable-aperture stop 1 shown in FIG. 2 according to an implementation. FIG. 4 is a schematic exploded view of a structure of a variable-aperture stop shown in FIG. 3 according to an implementation.

In a first implementation, as shown in FIG. 3 and FIG. 4, the variable-aperture stop 1 may include a base 11, a stationary bracket 12, a rotating bracket 13, a plurality of balls 14, a plurality of blades 15, a first gasket 16a, a second gasket 16b, a cover 17, an electrical connector 18, a first magnet 19b, a second magnet 20b, a first coil 19a, a second coil 20a, a first circuit board 21, a second circuit board 22, a drive chip 23, a magnetic-attractive piece 24, and a structural reinforcing plate 25. It should be noted that, in this implementation, there may be two balls 14, and the two balls 14 have same shapes and sizes. Therefore, same reference signs are used for both balls 14. In another implementation, a quantity of balls 14 is not limited, and all balls 14 may have different shapes and sizes.

In another implementation, the variable-aperture stop 1 may not include the plurality of balls 14, the first gasket 16a, the second gasket 16b, the cover 17, the electrical connector 18, the drive chip 23, the magnetic-attractive piece 24, or the structural reinforcing plate 25.

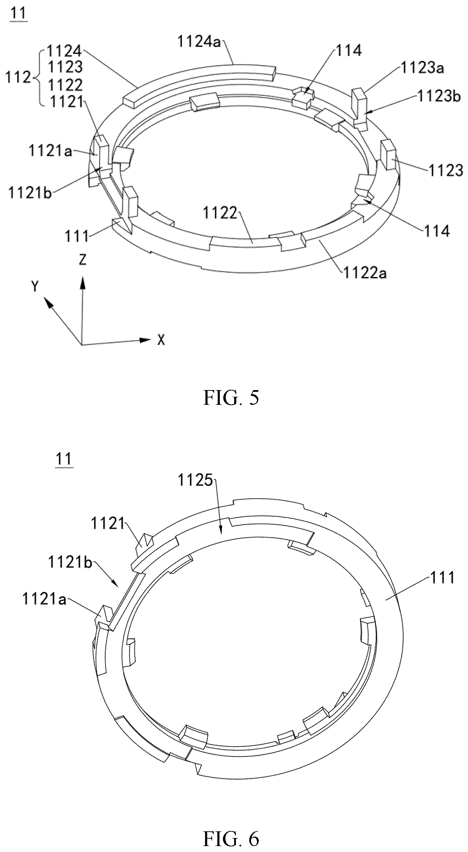

FIG. 5 is a diagram of a structure of the base 11 of the variable-aperture stop 1 shown in FIG. 4 according to an implementation. FIG. 6 is a diagram of a structure of the base 11 shown in FIG. 5 from another perspective.

As shown in FIG. 5 and FIG. 6, a bottom wall 111 of the base 11 may be in a ring shape. The base 11 may include the bottom wall 111 and a peripheral wall 112. The peripheral wall 112 may be connected to an outer periphery of the bottom wall 111. The peripheral wall 112 may include a first side wall 1121, a second side wall 1122, a third side wall 1123, and a fourth side wall 1124 that are sequentially connected. The first side wall 1121 and the third side wall 1123 may be arranged opposite to each other. The second side wall 1122 and the fourth side wall 1124 may be arranged opposite to each other.

For example, both the first side wall 1121 and the third side wall 1123 may be planar. To be specific, all of an outer peripheral surface and an inner peripheral surface of the first side wall 1121, and an outer peripheral surface and an inner peripheral surface of the third side wall 1123 may be flat surfaces. The outer peripheral surface of the first side wall 1121 is a first side surface 1121a. The outer peripheral surface of the third side wall 1123 is a third side surface 1123a. Both the second side wall 1122 and the fourth side wall 1124 may be curved. To be specific, all of an outer peripheral surface and an inner peripheral surface of the second side wall 1122, and an outer peripheral surface and an inner peripheral surface of the fourth side wall 1124 may be curved surfaces. The outer peripheral surface of the second side wall 1122 is a second side surface 1122a. The outer peripheral surface of the fourth side wall 1124 is a fourth side surface 1124a.

For example, the first side wall 1121 of the base 11 may be provided with a first notch 1121b, and the third side wall 1123 of the base 11 may be provided with a second notch 1123b. In this case, the first notch 1121b and the second notch 1123b may be arranged opposite to each other. The first notch 1121b may form an opening on the outer peripheral surface and the inner peripheral surface of the first side wall 1121. The second notch 1123b may form an opening on the outer peripheral surface and the inner peripheral surface of the third side wall 1123. In this case, both the first notch 1121b and the second notch 1123b may be used for communication between internal space of the base 11 and external space of the base 11.

For example, the bottom wall 111 of the base 11 may be provided with a plurality of first grooves 114 that are spaced apart. Each first groove 114 may form an opening on an inner surface of the bottom wall 111 of the base 11. For example, all of the plurality of first grooves 114 may be located on a side, close to the second notch 1123b, of the bottom wall 111. In this implementation, there may be two first grooves 114. The two first grooves 114 may be respectively located on two sides of the second notch 1123b, and are symmetrically arranged relative to the second notch 1123b.

For example, a position-limiting slot 1125 may be further provided on a surface, away from the peripheral wall 112, of the bottom wall 111. The position-limiting slot 1125 may be arranged backing the first notch 1121b. For example, the position-limiting slot 1125 may be in a semi-circular ring shape. In some implementations, the position-limiting slot 1125 may alternatively be in a quarter-circular ring shape or another shape. A specific shape of the position-limiting slot 1125 is not limited in this application. In another implementation, the bottom wall 111 may alternatively not be provided with the position-limiting slot 1125.

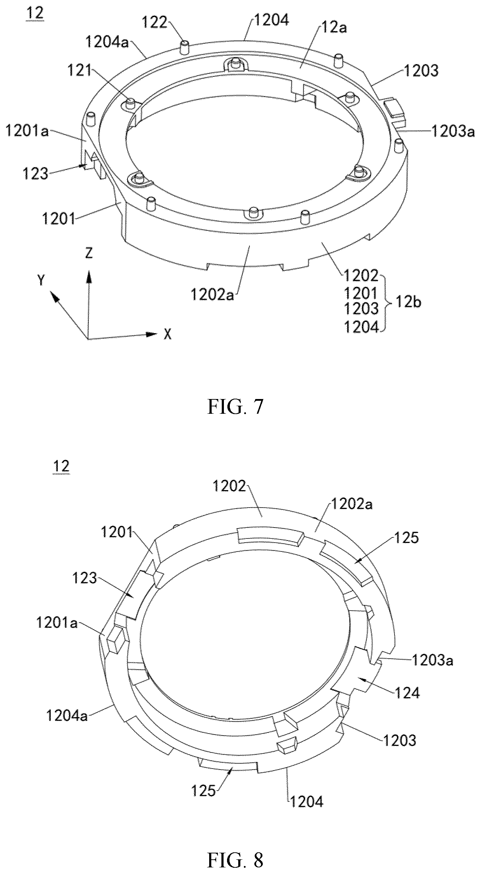

FIG. 7 is a diagram of a structure of the stationary bracket 12 of the variable-aperture stop 1 shown in FIG. 4 according to an implementation. FIG. 8 is a diagram of a structure of the stationary bracket 12 shown in FIG. 7 from a different perspective.

As shown in FIG. 7 and FIG. 8, the stationary bracket 12 may be in a ring shape. The stationary bracket 12 may include a top wall 12a and a peripheral wall 12b. The peripheral wall 12b may be fastened to an outer periphery of the top wall 12a. The peripheral wall 12b may include a first side wall 1201, a second side wall 1202, a third side wall 1203, and a fourth side wall 1204 that are sequentially connected. For example, the first side wall 1201 and the third side wall 1203 may be arranged opposite to each other, and the second side wall 1202 and the fourth side wall 1204 may be arranged opposite to each other. Both the first side wall 1201 and the third side wall 1203 may be planar. To be specific, all of an outer peripheral surface and an inner peripheral surface of the first side wall 1201, and an outer peripheral surface and an inner peripheral surface of the third side wall 1203 may be flat surfaces. Both the second side wall 1202 and the fourth side wall 1204 may be curved. To be specific, all of an outer peripheral surface and an inner peripheral surface of the second side wall 1202, and an outer peripheral surface and an inner peripheral surface of the fourth side wall 1204 may be curved surfaces. The outer peripheral surface of the first side wall 1201 is a first surface 1201a. The outer peripheral surface of the second side wall 1202 is a second surface 1202a. The outer peripheral surface of the third side wall 1203 is a third surface 1203a. The outer peripheral surface of the fourth side wall 1204 is a fourth surface 1204a.

For example, a plurality of rotating pillars 121 may be disposed at spacings on the top wall 12a of the stationary bracket 12. The plurality of rotating pillars 121 may be distributed in a ring shape. For example, there may be six rotating pillars 121. A plurality of stationary pillars 122 may be further disposed at spacings on the top wall 12a of the stationary bracket 12. The plurality of stationary pillars 122 may be distributed in a ring shape and located on a periphery of the stationary bracket 12. For example, there may be six stationary pillars 122.

For example, a third notch 123 and a fourth notch 124 may be arranged at spacings on the peripheral wall 12b of the stationary bracket 12. The third notch 123 and the fourth notch 124 may be arranged opposite to each other. Both the third notch 123 and the fourth notch 124 may form openings on an inner surface and an outer surface of the peripheral wall 12b. In this case, both the third notch 123 and the fourth notch 124 may be used for communication between internal space and external space of the stationary bracket 12. For example, the third notch 123 and the fourth notch 124 may be symmetrically arranged relative to the center of the stationary bracket 12. For example, the third notch 123 may be provided on the first side wall 1201 of the stationary bracket 12, and the fourth notch 124 may be provided on the third side wall 1203 of the stationary bracket 12.

For example, the stationary bracket 12 may be provided with a plurality of second grooves 125 that are spaced apart. Each second groove 125 may form an opening on an inner surface of the peripheral wall 12b. For example, all of the plurality of second grooves 125 may be located on a side, close to the fourth notch 124, of the stationary bracket 12. To be specific, all of the plurality of second grooves 125 may be located on sides, close to the fourth notch 124, of the second side wall 1202 and the fourth side wall 1204 of the stationary bracket 12. In this implementation, there may be two second grooves 125. The two second grooves 125 may be respectively located on the second side wall 1202 and the fourth side wall 1204 of the stationary bracket 12, and are symmetrically arranged relative to the fourth notch 124.

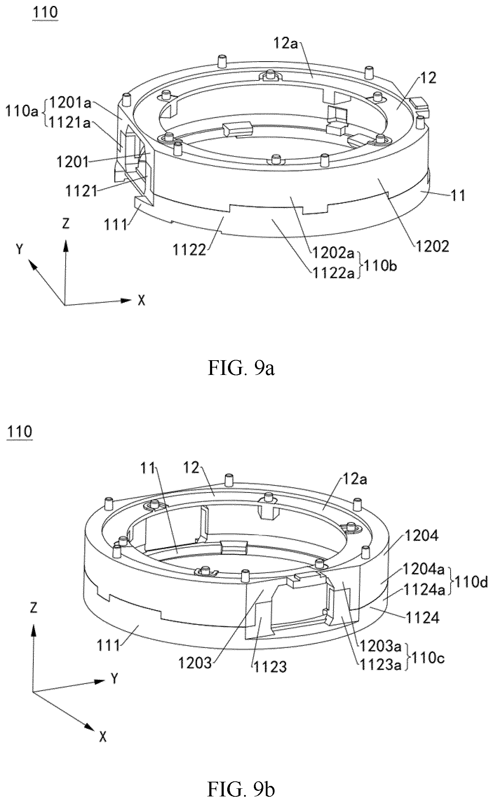

FIG. 9a is a diagram of a structure of the base 11 and the stationary bracket 12 of the variable-aperture stop 1 shown in FIG. 4 according to an implementation. FIG. 9b is a diagram of a structure of the structure shown in FIG. 9a from another perspective.

As shown in FIG. 9a and FIG. 9b, the stationary bracket 12 may be fastened to the base 11. In this case, the stationary bracket 12 and the base 11 may form a stationary base 110 of the variable-aperture stop 1. A surface, away from the stationary bracket 12, of the bottom wall 111 of the base 11 may form a bottom surface of the stationary base 110. A surface, away from the base 11, of the top wall 12a of the stationary bracket 12 may form a top surface of the stationary base 110. The first side wall 1201 of the stationary bracket 12 may be connected to the first side wall 1121 of the base 11. The second side wall 1202 of the stationary bracket 12 may be connected to the second side wall 1122 of the base 11. The third side wall 1203 of the stationary bracket 12 may be connected to the third side wall 1123 of the base 11. The fourth side wall 1204 of the stationary bracket 12 may be connected to the fourth side wall 1124 of the base 11.

For example, the first surface 1201a of the stationary bracket 12 and the first side surface 1121a of the base 11 together may form a first plane 110a of the stationary base 110. The second surface 1202a of the stationary bracket 12 and the second side surface 1122a of the base 11 together may form a first curved surface 110b of the stationary base 110. The third surface 1203a of the stationary bracket 12 and the third side surface 1123a of the base 11 together may form a second plane 110c of the stationary base 110. The fourth surface 1204a of the stationary bracket 12 and the fourth side surface 1124a of the base 11 together may form a second curved surface 110d of the stationary base 110. In this case, the first plane 110a, the first curved surface 110b, the second plane 110c, and the second curved surface 110d of the stationary base 110 may be sequentially connected head to tail, to form a peripheral surface of the stationary base 110.

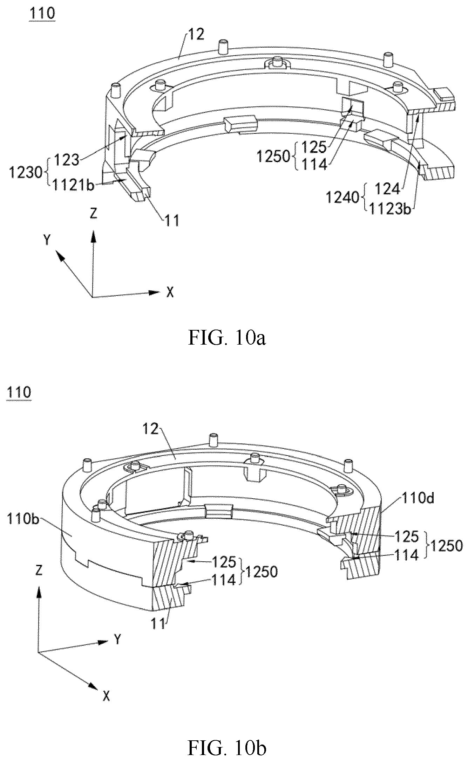

FIG. 10a is a partial cross-sectional view of the variable-aperture stop 1 shown in FIG. 3 at a line B-B according to an implementation. FIG. 10b is a partial cross-sectional view of the variable-aperture stop 1 shown in FIG. 3 at a line C-C according to an implementation.

As shown in FIG. 10a and FIG. 10b, the first notch 1121b may be arranged in correspondence with the third notch 123 to form a first through hole 1230. The second notch 1123b may be arranged in correspondence with the fourth notch 124 to form a second through hole 1240. The plurality of first grooves 114 may be arranged in a one-to-one correspondence with the plurality of second grooves 125 to form a plurality of rotating slots 1250. For example, all of the plurality of rotating slots 1250 may be located on a side, close to the second through hole 1240, of the stationary base 110. In this implementation, there may be two rotating slots 1250. The two rotating slots 1250 may be respectively disposed on the first curved surface 110b and the second curved surface 110d of the stationary base 110, and are symmetrically arranged relative to the second through hole 1240.

In some implementations, there may alternatively be four rotating slots 1250. The four rotating slots 1250 may be arranged around the stationary base 110 at spacings, and are evenly distributed.

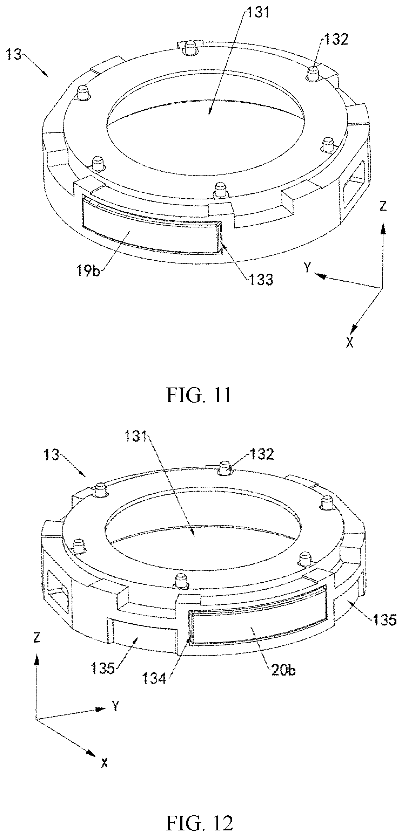

FIG. 11 is a diagram of a structure of the stationary bracket 12 and the first magnet 19b of the variable-aperture stop 1 shown in FIG. 3 according to an implementation. FIG. 12 is a diagram of a structure of the stationary bracket 12 and the second magnet 20b of the variable-aperture stop 1 shown in FIG. 3 according to an implementation.

As shown in FIG. 11 and FIG. 12, the rotating bracket 13 may be in a ring shape. The rotating bracket 13 may enclose light transmission space 131. A plurality of guide pillars 132 may be disposed at spacings on the top of the rotating bracket 13. The plurality of guide pillars 132 may be distributed in a ring shape. For example, there may be six guide pillars 132.

For example, the rotating bracket 13 may be provided with a plurality of first mounting slots 133 and second mounting slots 134 that are spaced apart. Both the first mounting slot 133 and the second mounting slot 134 may be formed by an outer peripheral surface of the rotating bracket 13 recessed toward the center of the rotating bracket 13. The outer peripheral surface of the rotating bracket 13 may connect a top surface and a bottom surface of the rotating bracket 13. The outer peripheral surface of the rotating bracket 13 may be parallel to an optical-axis direction of the variable-aperture stop 1.

For example, the rotating bracket 13 may be provided with a plurality of rolling slots 135 that are spaced apart. The plurality of rolling slots 135 may be distributed in a ring shape. The rolling slot 135 may be in a long strip shape. The rolling slot 135 may be arranged along a circumferential direction of the rotating bracket 13 (to be specific, a peripheral direction that surrounds an axial direction of the rotating bracket 13).

For example, all of the plurality of rolling slots 135 may be located on a side, close to the second mounting slot 134, of the rotating bracket 13. In this implementation, there may be two rolling slots 135. The two rolling slots 135 may be respectively located on two sides of the second mounting slot 134, and are symmetrically arranged relative to the second mounting slot 134. In another implementation, there may alternatively be four rolling slots 135. The four rolling slots 135 may be arranged around the rotating bracket 13, and are evenly distributed.

As shown in FIG. 11, the first magnet 19b may be fastened in the first mounting slot 133 of the rotating bracket 13 through bonding or the like. For example, the first magnet 19b may be in an arc shape. A shape of the first magnet 19b can adapt to a shape of the first mounting slot 133. In this way, when the first magnet 19b is fastened in the first mounting slot 133, the first magnet 19b can be embedded in the rotating bracket 13. Integrity of a structure formed by the first magnet 19b and the rotating bracket 13 is good. In addition, the first magnet 19b and the rotating bracket 13 have overlapping regions in all directions, so that the first magnet 19b is not likely to cause an additional increase in a size of the variable-aperture stop 1. In another implementation, the first magnet 19b may alternatively be embedded in the rotating bracket 13 by using an injection molding technique.

As shown in FIG. 12, the second magnet 20b may be fastened in the second mounting slot 134 of the rotating bracket 13 through bonding or the like. For example, the second magnet 20b may be in an arc shape. A shape of the second magnet 20b can adapt to a shape of the second mounting slot 134. In this way, when the second magnet 20b is fastened in the second mounting slot 134, the second magnet 20b can be embedded in the rotating bracket 13. Integrity of a structure formed by the second magnet 20b and the rotating bracket 13 is good. In addition, the second magnet 20b and the rotating bracket 13 have overlapping regions in all directions, so that the second magnet 20b is not likely to cause an additional increase in a size of the variable-aperture stop 1. In another implementation, the second magnet 20b may alternatively be embedded in the rotating bracket 13 by using an injection molding technique.

For example, the first magnet 19b and the second magnet 20b may be symmetrically disposed relative to the center of the rotating bracket 13. In this way, when the first magnet 19b and the second magnet 20b are fastened to the rotating bracket 13, symmetry of a structure formed by the first magnet 19b, the second magnet 20b, and the rotating bracket 13 is good. In this case, when the first magnet 19b, the second magnet 20b, and the rotating bracket 13 cooperate with other components, the first magnet 19b, the second magnet 20b, and the rotating bracket 13 are not likely to tilt due to instability of a center of gravity.

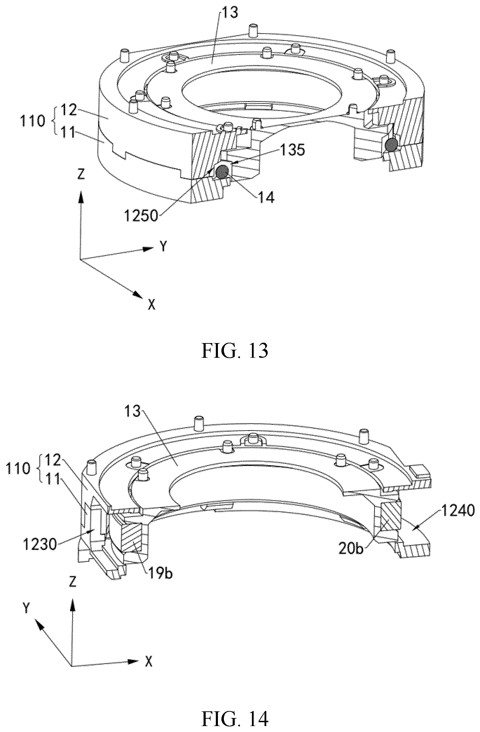

FIG. 13 is a partial cross-sectional view of the variable-aperture stop 1 shown in FIG. 3 at a line C-C according to an implementation.

As shown in FIG. 13, the rotating bracket 13 may be disposed on an inner side of the base 11 and an inner side of the stationary bracket 12, in other words, located on an inner side of the stationary base 110. It can be understood that, that the rotating bracket 13 is located on the inner side of the stationary base 110 includes that a projection of the rotating bracket 13 on a reference plane at least partially overlaps with a projection of the stationary base 110 on the reference plane. The reference plane is parallel to the optical-axis direction of the variable-aperture stop 1.

For example, the rotating bracket 13 may be rotatably connected to the base 11 and the stationary bracket 12. In other words, the rotating bracket 13 may be rotatably connected to the stationary base 110. In this case, the plurality of rotating slots 1250 and the plurality of rolling slots 135 may be arranged opposite to each other in a one-to-one correspondence, to form movement space. To be specific, one rotating slot 1250 and one rolling slot 135 may be arranged opposite to each other, to form movement space. A part of the ball 14 may be located in the rotating slot 1250. The other part of the ball 14 may be located in the rolling slot 135.

For example, when the rotating bracket 13 is mounted on the inner side of the stationary base 110, sizes, such as a length and a width, of the rolling slot 135 may be set, so that a wall surface of the rolling slot 135 along a length direction can abut against the ball 14. In this way, when the rotating bracket 13 rotates relative to the stationary base 110, the wall surface of the rolling slot 135 along the length direction can prevent the ball 14 from rolling along a width direction of the rolling slot 135 (in other words, moving along the Z-axis direction in this implementation). In addition, a wall surface of the rolling slot 135 along the width direction does not abut against the ball 14. In this way, when the rotating bracket 13 rotates relative to the stationary base 110, the ball 14 can roll along the length direction of the rolling slot 135.

In some implementations, there may alternatively be four rolling slots 135. The four rolling slots 135 may be arranged at spacings around the rotating bracket 13, and are evenly distributed. In this case, the four rolling slots 135 may be arranged opposite to the four rotating slots 1250 in a one-to-one correspondence, to form movement space. There may also be four balls 14. The four balls 14 may be disposed in a plurality of blocks of movement space in a one-to-one correspondence. In another implementation, quantities of rolling slots 135, rotating slots 1250, and balls 14 may alternatively be set according to a requirement.

In another implementation, the ball 14 in the variable-aperture stop 1 may alternatively be replaced with another movable piece that can roll or move relative to the rotating bracket 13, for example, a sliding block or a sliding rod.

FIG. 14 is a partial cross-sectional view of the variable-aperture stop 1 shown in FIG. 3 at a line B-B according to an implementation.

As shown in FIG. 14, when the rotating bracket 13 is disposed on the inner side of the stationary base 110, the first magnet 19b fastened to the rotating bracket 13 may be disposed opposite to the first through hole 1230 of the stationary base 110. In this case, the first magnet 19b may be exposed relative to the base 11 and the stationary bracket 12 through the first through hole 1230. In addition, the second magnet 20b fastened to the rotating bracket 13 may also be disposed opposite to the second through hole 1240 of the stationary base 110. In this case, the second magnet 20b may be exposed relative to the base 11 and the stationary bracket 12 through the second through hole 1240.

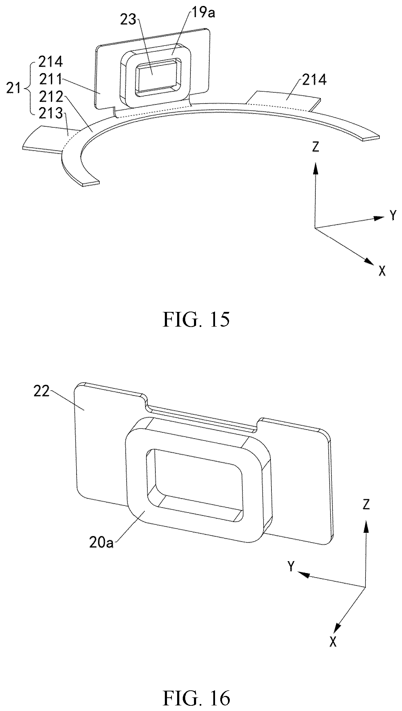

FIG. 15 is a diagram of a structure of the first circuit board 21, the first coil 19a, and the drive chip 23 of the variable-aperture stop 1 shown in FIG. 4 according to an implementation.

As shown in FIG. 15, the first circuit board 21 may be a flexible circuit board, a rigid circuit board, or a rigid-flexible circuit board. In this implementation, the first circuit board 21 may be a flexible circuit board. In this case, a thickness of the first circuit board 21 may be small. For example, the first circuit board 21 may include a main body portion 211, a connection portion 212, a first extension portion 213, and a second extension portion 214. The main body portion 211 may be connected to the connection portion 212, and is bent upward relative to the connection portion 212 (to be specific, bent along a positive direction of the Z axis in this implementation). The first extension portion 213 and the second extension portion 214 may be respectively located on two sides of the main body portion 211, and are connected to the connection portion 212. For example, the connection portion 212 may be in a semi-circular ring shape. In some implementations, the connection portion 212 may alternatively be in a quarter-circular ring shape or another shape. A shape of the connection portion 212 is not limited in this application. In another implementation, the first circuit board 21 may alternatively not include the connection portion 212, and the first extension portion 213 and the second extension portion 214 may alternatively be directly connected to the main body portion 211.

For example, the first coil 19a may be fastened to the main body portion 211 of the first circuit board 21, and is located on an inner peripheral surface of the main body portion 211. The first coil 19a may be electrically connected to the main body portion 211 of the first circuit board 21. The drive chip 23 may be fastened to the main body portion 211 of the first circuit board 21 through welding or the like. The drive chip 23 may be electrically connected to the main body portion 211, and is electrically connected to the first coil 19a through the main body portion 211.

For example, the drive chip 23 may be located on the inner peripheral surface of the main body portion 211 and located in a region enclosed by the first coil 19a. In this way, the drive chip 23 and the first coil 19a are arranged more compactly on the first circuit board 21. This facilitates miniaturization of the variable-aperture stop 1.

In some implementations, the variable-aperture stop 1 may further include a capacitor (not shown in the figure). The capacitor may be welded to the main body portion 211 of the first circuit board 21. The capacitor may be electrically connected to the drive chip 23 through the main body portion 211. In this way, the capacitor can filter a power supply voltage of the drive chip 23, to prevent radio frequency interference to the variable-aperture stop during operation.

It should be noted that, for ease of description of a specific structure and shape of the first circuit board 21, in this implementation, the first circuit board 21 is divided into plurality of parts for description, but an integrated structure of the first circuit board 21 is not affected. FIG. 15 shows the main body portion 211, the connection portion 212, the first extension portion 213, and the second extension portion 214 of the first circuit board 21 by using dashed lines. In another implementation, the first circuit board 21 may alternatively not be an integrated structure.

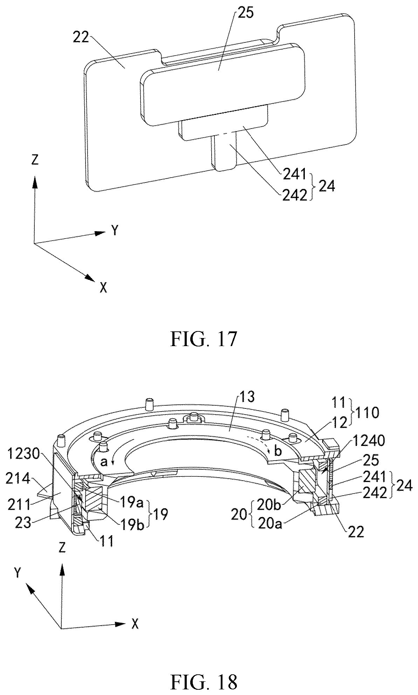

FIG. 16 is a diagram of a structure of the second circuit board 22, the second coil 20a, the magnetic-attractive piece 24, and the structural reinforcing plate 25 of the variable-aperture stop 1 shown in FIG. 4 according to an implementation. FIG. 17 is a diagram of a structure of the structure shown in FIG. 16 from another perspective.

As shown in FIG. 16 and FIG. 17, the second circuit board 22 may be a flexible circuit board, a rigid circuit board, or a rigid-flexible circuit board. In this implementation, the second circuit board 22 may be a flexible circuit board. In this case, a thickness of the second circuit board 22 may be small. The second coil 20a may be fastened to an inner peripheral surface of the second circuit board 22. The magnetic-attractive piece 24 may be fastened to an outer peripheral surface of the second circuit board 22. The magnetic-attractive piece 24 may be in a "T" shape. The magnetic-attractive piece 24 may include a horizontal part 241 and a vertical part 242. The horizontal part 241 may be parallel to the X-Y plane. The vertical part 242 may be perpendicular to the X-Y plane. In another implementation, the vertical part 242 may alternatively be disposed at an included angle with the X-Y plane.

In another implementation, the magnetic-attractive piece 24 may alternatively be in another shape. A specific shape of the magnetic-attractive piece 24 is not limited in this application.

It should be noted that, for ease of description of a specific structure and shape of the magnetic-attractive piece 24, in this implementation, the magnetic-attractive piece 24 is divided into two parts for description, but an integrated structure of the magnetic-attractive piece 24 is not affected. FIG. 17 shows the horizontal part 241 and the vertical part 242 of the magnetic-attractive piece 24 by using dashed lines. In another implementation, the magnetic-attractive piece 24 may alternatively not be an integrated structure.

For example, the structural reinforcing plate 25 may be made of a non-magnetic-conductive metal material. The structural reinforcing plate 25 may be fastened to the outer peripheral surface of the second circuit board 22. For example, the structural reinforcing plate 25 may be located on a top side of the magnetic-attractive piece 24. In this way, when the second circuit board 22 is a flexible circuit board, structural strength of the second circuit board 22 can be enhanced by the structural reinforcing plate 25, to avoid bending, collapsing, or the like of the second circuit board 22, and avoid a component failure or other problems. In some implementations, the first circuit board 21 may also be provided with the structural reinforcing plate 25 to enhance structural strength of the first circuit board 21.

In another implementation, the first circuit board 21 and/or the second circuit board 22 may alternatively be rigid circuit boards. In this way, structural strength of the first circuit board 21 and/or the second circuit board 22 is high, to facilitate subsequent mounting.

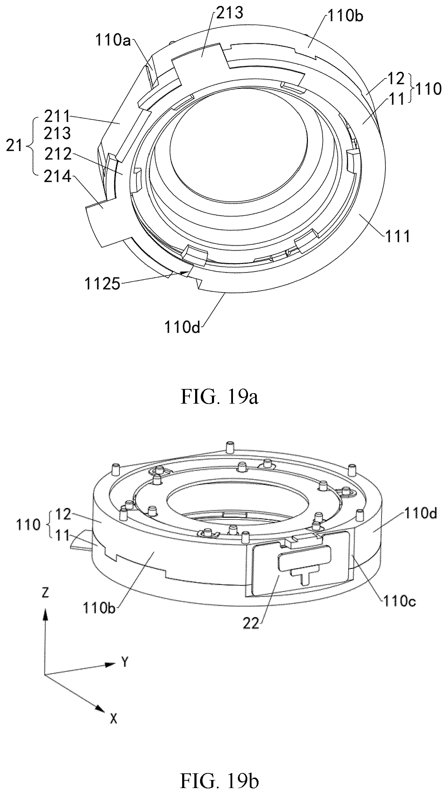

FIG. 18 is a partial cross-sectional view of the variable-aperture stop 1 shown in FIG. 3 at a line B-B according to an implementation. FIG. 19a is a diagram of a structure of the structure shown in FIG. 18 from another perspective.

As shown in FIG. 18 and FIG. 19a, the connection portion 212 of the first circuit board 21 may be fastened, through bonding or the like, to a surface, away from the stationary bracket 12, of the base 11, namely, the bottom surface of the stationary base 110. The connection portion 212 of the first circuit board 21 may be fastened in the position-limiting slot 1125 on the bottom wall 111 of the base 11. A shape of the connection portion 212 can adapt to a shape of the position-limiting slot 1125. In this way, the first circuit board 21 and the base 11 have overlapping regions in all directions, and space in which the base 11 is located can be used for the first circuit board 21, so that the first circuit board 21 and the base 11 are arranged compactly.

For example, both the first extension portion 213 and the second extension portion 214 of the first circuit board 21 may extend out relative to the base 11. The first extension portion 213 and the second extension portion 214 may be configured to electrically connect to a device outside the variable-aperture stop 1. The main body portion 211 of the first circuit board 21 may be disposed opposite to an outer peripheral surface of the stationary base 110. The inner peripheral surface of the main body portion 211 may be fastened to the first plane 110a of the stationary base 110 through bonding or the like, and cover the first through hole 1230. In this case, an area occupied by the first circuit board 21 on the peripheral surface of the stationary base 110 may be less than half of an area of the peripheral surface of the stationary base 110.

For example, the first coil 19a and the drive chip 23 may be located in the first through hole 1230. The first magnet 19b and the first coil 19a may be respectively located on two sides of the main body portion 211 of the first circuit board 21. In this way, the first coil 19a and the stationary base 110 have overlapping regions in all directions, and space in which the stationary base 110 is located can be used for the first coil 19a, so that the first circuit board 21, the first coil 19a, and the stationary base 110 are arranged compactly, and the first circuit board 21 and the first coil 19a occupy small space. This facilitates miniaturization of the variable-aperture stop 1.

In some implementations, a part of the main body portion 211 of the first circuit board 21 may be further fastened to the first curved surface 110b and/or the second curved surface 110d of the stationary base 110. An area occupied by the first circuit board 21 on the first curved surface 110b and the second curved surface 110d of the stationary base 110 may be less than half of a total area of the first curved surface 110b and the second curved surface 110d. For example, the area occupied by the first circuit board 21 on the first curved surface 110b and the second curved surface 110d may be 10% of the total area of the first curved surface 110b and the second curved surface 110d, or may be 0.

In some implementations, the first circuit board 21 may alternatively not include the connection portion 212, the first extension portion 213, or the second extension portion 214. The main body portion 211 of the first circuit board 21 may alternatively be electrically connected to a device outside the variable-aperture stop 1 through a component such as a metal terminal or a lead.

In some implementations, the first circuit board 21 may alternatively not include the connection portion 212, the first extension portion 213, or the second extension portion 214. The variable-aperture stop 1 may alternatively be electrically connected to a device outside the variable-aperture stop 1 through the second circuit board 22. The second circuit board 22 may be electrically connected to a device outside the variable-aperture stop 1 through a component such as a metal terminal or a lead.

In another implementation, the first coil 19a may alternatively be located outside the first through hole 1230.

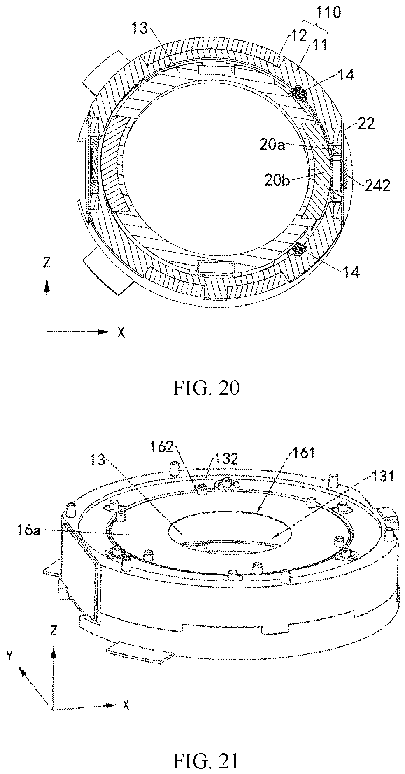

FIG. 19b is a diagram of a structure of the structure shown in FIG. 18 from still another perspective. FIG. 20 is a partial cross-sectional view of the variable-aperture stop 1 shown in FIG. 3 at a line D-D according to an implementation.

As shown in FIG. 18, FIG. 19b, and FIG. 20, the inner peripheral surface of the second circuit board 22 may be fastened to the second plane 110c of the stationary base 110 through bonding or the like, and cover the second through hole 1240. In this case, an area occupied by the second circuit board 22 on the peripheral surface of the stationary base 110 may be less than half of the area of the peripheral surface of the stationary base 110. For example, the areas occupied by the first circuit board 21 and the second circuit board 22 on the peripheral surface of the stationary base 110 may be less than half of the area of the peripheral surface of the stationary base 110.

For example, the second coil 20a may be located in the second through hole 1240. In this way, the second coil 20a and the stationary base 110 have overlapping regions with the stationary base 110 in all directions, and space in which the stationary base 110 is located can be used for the second coil 20a, so that the second circuit board 22, the second coil 20a, and the stationary base 110 are arranged compactly, and the second circuit board 22 and the second coil 20a occupy small space. This facilitates miniaturization of the variable-aperture stop 1.

In some implementations, a part of the second circuit board 22 may be further fastened to the first curved surface 110b and/or the second curved surface 110d of the stationary base 110. An area occupied by the second circuit board 22 on the first curved surface 110b and the second curved surface 110d of the stationary base 110 may be less than half of the total area of the first curved surface 110b and the second curved surface 110d. For example, the area occupied by the second circuit board 22 on the first curved surface 110b and the second curved surface 110d may be 10% of the total area of the first curved surface 110b and the second curved surface 110d, or may be 0.

In some implementations, the areas occupied by the first circuit board 21 and the second circuit board 22 on the first curved surface 110b and the second curved surface 110d may be less than half of the total area of the first curved surface 110b and the second curved surface 110d.

In another implementation, the second coil 20a may alternatively be located outside the second through hole 1240.

As shown in FIG. 18 and FIG. 20, when the inner peripheral surface of the second circuit board 22 is fastened to the second plane 110c of the stationary base 110 and covers the second through hole 1240, the second magnet 20b and the magnetic-attractive piece 24 may be respectively located on two sides of the second circuit board 22. At least a part of a projection of the magnetic-attractive piece 24 on the reference plane may coincide with a projection of the second magnet 20b on the reference plane. For example, a projection of the horizontal part 241 of the magnetic-attractive piece 24 on the reference plane may coincide with the projection of the second magnet 20b on the reference plane, and a projection of the vertical part 242 of the magnetic-attractive piece 24 on the reference plane may be located on a bottom side of the projection of the second magnet 20b on the reference plane. In other words, the magnetic-attractive piece 24 may be located obliquely below the second magnet 20b.

It can be understood that the magnetic-attractive piece 24 may generate a first attraction force along a first direction (namely, the Z-axis direction in this implementation) for the second magnet 20b, and also generate a second attraction force along a second direction (namely, an X-axis direction in this implementation, which is a radial direction in which the second magnet 20b of the variable-aperture stop 1 is located) for the second magnet 20b. The rotating bracket 13 may abut against the base 11 under the action of the first attraction force between the second magnet 20b and the magnetic-attractive piece 24. This can effectively avoid displacement or shaking of the rotating bracket 13 in the stationary base 110 along the Z-axis direction under impact of a gravity pillarure difference. The rotating bracket 13 may further abut against the ball 14 under the action of the second attraction force between the second magnet 20b and the magnetic-attractive piece 24, and press the ball 14 against the stationary base 110. This can effectively avoid displacement or shaking of the rotating bracket 13 in the stationary base 110 on the X-Y plane under impact of a gap tolerance between the rotating bracket 13 and the stationary base 110.

For example, total gravity of the rotating bracket 13, the first magnet 19b, and the second magnet 20b may be G, the first attraction force of the magnetic-attractive piece 24 for the second magnet 20b may range from 1.5 G to 5 G, and the second attraction force of the magnetic-attractive piece 24 for the second magnet 20b may range from 1.5 G to 5 G.

In another implementation, the magnetic-attractive piece 24 may alternatively be located at another position in the variable-aperture stop 1, and generate both a first attraction force and a second attraction force for another magnetic piece in the variable-aperture stop 1. This is not limited in this application.

As shown in FIG. 18 and FIG. 20, the first coil 19a may be disposed facing the first magnet 19b, and the second coil 20a may be disposed facing the second magnet 20b. In this case, the first coil 19a and the first magnet 19b may form a first drive mechanism 19 of the variable-aperture stop 1, and the second coil 20a and the second magnet 20b may form a second drive mechanism 20 of the variable-aperture stop 1.

It should be understood that, that the first coil 19a faces the first magnet 19b may be that a plane on which the first coil 19a is located is arranged face to face with the first magnet 19b. In this implementation, both the plane on which the first coil 19a is located and a plane on which the first magnet 19b is located may be parallel to an optical-axis direction of the variable-aperture stop 1. The plane on which the first coil 19a is located may be perpendicular to an axis of winding of the first coil 19a. That the second coil 20a faces the second magnet 20b may be that a plane on which the second coil 20a is located is arranged face to face with the second magnet 20b. In this implementation, both the plane on which the second coil 20a is located and a plane on which the second magnet 20b is located may be parallel to the optical-axis direction of the variable-aperture stop 1. The plane on which the second coil 20a is located may be perpendicular to an axis of winding of the second coil 20a. In another implementation, positions of the first coil 19a and the first magnet 19b may be exchanged, and positions of the second coil 20a and the second magnet 20b may also be exchanged.

When the first coil 19a is energized, the first coil 19a and the first magnet 19b may generate forces that interact with each other. In this way, when the first magnet 19b is subject to an acting force, the first magnet 19b can drive the rotating bracket 13 to rotate relative to the base 11 and the stationary bracket 12, in other words, rotate relative to the stationary base 110. When the second coil 20a is energized, the second coil 20a and the second magnet 20b may generate forces that interact with each other. In this way, when the second magnet 20b is subject to an acting force, the second magnet 20b can drive the rotating bracket 13 to rotate relative to the base 11 and the stationary bracket 12, in other words, rotate relative to the stationary base 110.

It can be understood that a magnetic position of the first magnet 19b (to be specific, positions of a south pole and a north pole of the first magnet 19b) or a current direction in the first coil 19a is changed, to change a direction along which a force is applied to the first magnet 19b, and further change a rotation direction of the rotating bracket 13. In addition, a magnetic position of the second magnet 20b (to be specific, positions of a south pole and a north pole of the second magnet 20b) or a current direction in the second coil 20a may also be changed, to change a direction along which a force is applied to the second magnet 20b, and further change a rotation direction of the rotating bracket 13.

In this implementation, a direction along which the first magnet 19b drives the rotating bracket 13 to rotate relative to the stationary bracket 12 and the base 11 is the same as a direction along which the second magnet 20b drives the rotating bracket 13 to rotate relative to the stationary bracket 12 and the base 11. In this case, the first magnet 19b and the second magnet 20b may jointly drive the rotating bracket 13 to rotate relative to the stationary bracket 12 and the base 11 along a first direction a (this direction is indicated by a solid line with an arrow in FIG. 18) or along a second direction b (this direction is indicated by a dashed line with an arrow in FIG. 18).

In some implementations, the drive chip 23 may be further configured to detect magnetic field strength of the first magnet 19b. It can be understood that, when the rotating bracket 13 rotates relative to the base 11 and the stationary bracket 12, the first magnet 19b also rotates relative to the base 11 and the stationary bracket 12 along with the rotating bracket 13. In this case, the first magnet 19b is located at different positions relative to the base 11 and the stationary bracket 12. The drive chip 23 may be configured to detect magnetic field strength of the first magnet 19b at different positions. In this way, an angle at which the rotating bracket 13 rotates relative to the base 11 and the stationary bracket 12 may be determined based on the magnetic field strength detected by the drive chip 23, to accurately determine a state of the variable-aperture stop 1, and further accurately control luminous flux that enters the variable-aperture stop 1.

In another implementation, the drive chip 23 may alternatively be disposed at a position opposite to the second magnet 20b. The drive chip 23 is configured to detect magnetic field strength of the second magnet 20b at different positions.

In another implementation, the drive chip 23 may alternatively not have a function of detecting magnetic field strength of the first magnet 19b. The variable-aperture stop 1 may detect magnetic field strength of the first magnet 19b at different positions through another means. For example, the variable-aperture stop 1 may include a position sensor (for example, a Hall effect sensor). When the position sensor is located on a periphery of the first magnet 19b, the position sensor may detect magnetic field strength of the first magnet 19b at different positions. When the position sensor is located on a periphery of the second magnet 20b, the position sensor may detect magnetic field strength of the second magnet 20b at different positions. When there are two position sensors, one is located on a periphery of the first magnet 19b, and the other is located on a periphery of the second magnet 20b, one position sensor may detect magnetic field strength of the first magnet 19b at different positions, and the other position sensor may detect magnetic field strength of the second magnet 20b at different positions.

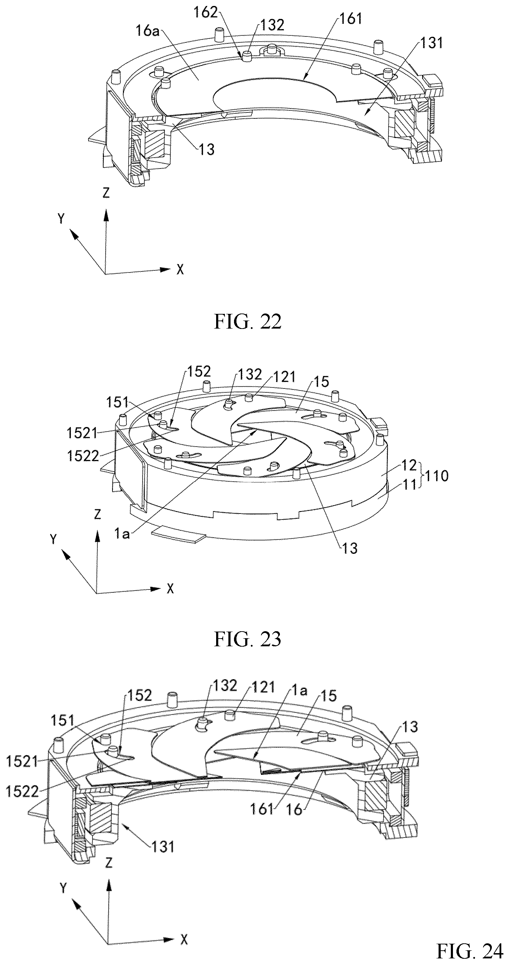

FIG. 21 is a diagram of a partial structure of the variable-aperture stop 1 shown in FIG. 3. FIG. 22 is a partial cross-sectional view of the variable-aperture stop 1 shown in FIG. 3 at a line B-B according to an implementation.

As shown in FIG. 21 and FIG. 22, the first gasket 16a may be in a ring shape. The first gasket 16a may have a first light transmission hole 161. The first gasket 16a may be fastened to the top surface of the rotating bracket 13. In this case, the first light transmission hole 161 may be arranged opposite to light transmission space 131 of the rotating bracket 13, and communicate with the light transmission space 131 of the rotating bracket 13.

For example, the first gasket 16a may be provided with a plurality of first fastening holes 162 that are spaced apart. A quantity of first fastening holes 162 may be equal to a quantity of guide pillars 132 of the rotating bracket 13. In this implementation, there may be six first fastening holes 162. All of the plurality of first fastening holes 162 may be located on a periphery of the first gasket 16a, and are arranged around the first light transmission hole 161 of the first gasket 16a.

For example, the plurality of guide pillars 132 of the rotating bracket 13 may pass through the plurality of first fastening holes 162 of the first gasket 16a in a one-to-one correspondence. In this way, based on fitting between the first fastening hole 162 of the first gasket 16a and the guide pillar 132 of the rotating bracket 13, the first gasket 16a is unlikely to shake on the X-Y plane.

FIG. 23 is a diagram of a partial structure of the variable-aperture stop 1 shown in FIG. 3. FIG. 24 is a partial cross-sectional view of the variable-aperture stop 1 shown in FIG. 3 at a line B-B according to an implementation.

As shown in FIG. 23 and FIG. 24, the plurality of blades 15 may have same shapes and sizes. In this implementation, there may be six blades 15. The following describes a structure of the blade 15 in detail by using one of the blades 15 as an example.

For example, the blade 15 may be provided with a rotating hole 151 and a guide hole 152 that are spaced apart. The rotating hole 151 may be located at an end of the blade 15. The guide hole 152 may be located in the middle of the blade 15. The rotating hole 151 may be a circular hole. The guide hole 152 may be a strip-shaped hole. For example, the guide hole 152 may include a first end wall 1521 and a second end wall 1522 that are arranged opposite to each other. The first end wall 1521 may be arranged close to the rotating hole 151 relative to the second end wall 1522.

For example, the rotating hole 151 of the blade 15 may be rotatably connected to one rotating pillar 121 of the stationary bracket 12, and the guide hole 152 of the blade 15 may be slidably connected to one guide pillar 132 of the rotating bracket 13. It should be understood that, in another implementation, positions of the rotating hole 151 and the rotating pillar 121 may be exchanged, and positions of the guide hole 152 and the guide pillar 132 may also be exchanged. In other words, both the rotating pillar 121 and the guide pillar 132 may be disposed on the blade 15, the rotating hole 151 may be arranged on the stationary bracket 12, and the guide hole 152 may be arranged on the rotating bracket 13.

As shown in FIG. 23 and FIG. 24, the plurality of blades 15 may be distributed in a ring shape and together enclose the aperture hole 1a of the variable-aperture stop 1. The aperture hole 1a may be arranged opposite to the first light transmission hole 161 of the first gasket 16a, and is used for communication between the first light transmission hole 161 and the light transmission space 131 of the rotating bracket 13. For example, a center axis of the aperture hole 1a may coincide with a center axis of the first light transmission hole 161.

It can be understood that, because each blade 15 is rotatably connected to the stationary bracket 12 and is slidably connected to the rotating bracket 13, when the rotating bracket 13 rotates relative to the stationary base 110, the plurality of blades 15 may be driven to expand or close. In this case, an aperture of the aperture hole 1a enclosed by the plurality of blades 15 may increase as the plurality of blades 15 expand, or decrease as the plurality of blades 15 close.

In some implementations, a maximum aperture of the aperture hole 1a may be greater than or equal to an aperture of the first light transmission hole 161 of the first gasket 16a. In this case, maximum luminous flux of the variable-aperture stop 1 depends on the aperture of the first light transmission hole 161 of the first gasket 16a.

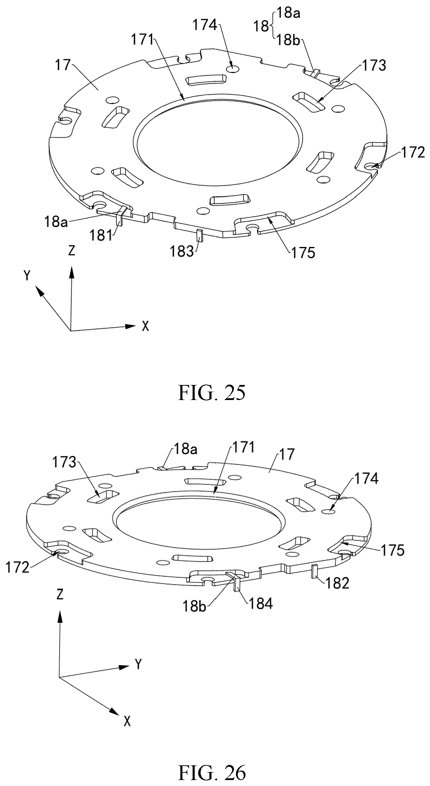

FIG. 25 is a diagram of a structure of the cover 17 and the electrical connector 18 of the variable-aperture stop 1 shown in FIG. 4 according to an implementation. FIG. 26 is a diagram of a structure of the structure shown in FIG. 25 from another perspective.

As shown in FIG. 25 and FIG. 26, the cover 17 may be in a ring shape. The cover 17 may be provided with a second light transmission hole 171. The second light transmission hole 171 may pass through a top surface and a bottom surface of the cover 17. The cover 17 may be provided with a plurality of second fastening holes 172 that are spaced apart. A quantity of second fastening holes 172 may be the same as a quantity of stationary pillars 122 of the stationary bracket 12. In this implementation, there may be six second fastening holes 172. All of the plurality of second fastening holes 172 may be located on a periphery of the cover 17, and are arranged around the second light transmission hole 171.

For example, the cover 17 may be further provided with a plurality of first avoidance holes 173 that are spaced apart. A quantity of first avoidance holes 173 may be the same as a quantity of guide pillars 132 of the rotating bracket 13. In this implementation, there may be six first avoidance holes 173. The plurality of first avoidance holes 173 may be arranged around the second light transmission hole 171. The plurality of first avoidance holes 173 may be further spaced away from the plurality of second fastening holes 172.

For example, the cover 17 may be further provided with a plurality of second avoidance holes 174 that are spaced apart. A quantity of the plurality of second avoidance holes 174 may be the same as a quantity of rotating pillars 121 of the stationary bracket 12. In this implementation, there may be six second avoidance holes 174. The plurality of second avoidance holes 174 may be arranged around the second light transmission hole 171. The plurality of second avoidance holes 174 may be further spaced away from the plurality of first avoidance holes 173.

For example, the cover 17 may be further provided with a plurality of fastening slots 175 that are spaced apart. The plurality of fastening slots 175 may be arranged on a periphery of the cover 17. All openings of the plurality of fastening slots 175 may be formed on the top surface of the cover 17. A quantity of fastening slots 175 may be the same as the quantity of second fastening holes 172. In this implementation, there may be six fastening slots 175. The plurality of fastening slots 175 may be exposed from the plurality of second fastening holes 172 in a one-to-one correspondence.

For example, the electrical connector 18 may include a first electrical sub-connector 18a and a second electrical sub-connector 18b. The first electrical sub-connector 18a may be disposed on the cover 17. The second electrical sub-connector 18b may be disposed on the cover 17. The first electrical sub-connector 18a may be in an arc shape. The second electrical sub-connector 18b may also be in an arc shape. Both the first electrical sub-connector 18a and the second electrical sub-connector 18b may be disposed around the second light transmission hole 171. The first electrical sub-connector 18a and the second electrical sub-connector 18b may be disposed opposite to each other.

For example, the first electrical sub-connector 18a may include a first end 181 and a second end 182 that are disposed opposite to each other. Both the first end 181 and the second end 182 of the first electrical sub-connector 18a may extend to the outside relative to the cover 17, and are bent along a negative direction of the Z axis (FIG. 4 also shows the first electrical sub-connector 18a). The second electrical sub-connector 18b may include a first end 183 and a second end 184 that are disposed opposite to each other. Both the first end 183 and the second end 184 of the second electrical sub-connector 18b may extend to the outside relative to the cover 17, and are bent along the negative direction of the Z axis (FIG. 4 also shows the second electrical sub-connector 18b). The first end 181 of the first electrical sub-connector 18a and the first end 183 of the second electrical sub-connector 18b may be disposed opposite to each other. The second end 182 of the first electrical sub-connector 18a and the second end 184 of the second electrical sub-connector 18b may be disposed opposite to each other.

For example, the cover 17 may be made of a plastic material. The electrical connector 18 may be a metal terminal. To be specific, both the first electrical sub-connector 18a and the second electrical sub-connector 18b may be made of a metal material. In some implementations, the first electrical sub-connector 18a, the second electrical sub-connector 18b, and the cover 17 may be integrated by using an injection molding technique. In this case, both the first electrical sub-connector 18a and the second electrical sub-connector 18b may be embedded in the cover 17. In another implementation, a groove may alternatively be formed in the cover 17 for mounting the first electrical sub-connector 18a and the second electrical sub-connector 18b in the cover 17.

In some implementations, the first electrical sub-connector 18a and/or the second electrical sub-connector 18b may alternatively be disposed in another component of the variable-aperture stop 1, for example, the base 11 or the stationary bracket 12. In another implementation, the first electrical sub-connector 18a and/or the second electrical sub-connector 18b may alternatively be disposed in a device outside the variable-aperture stop 1.

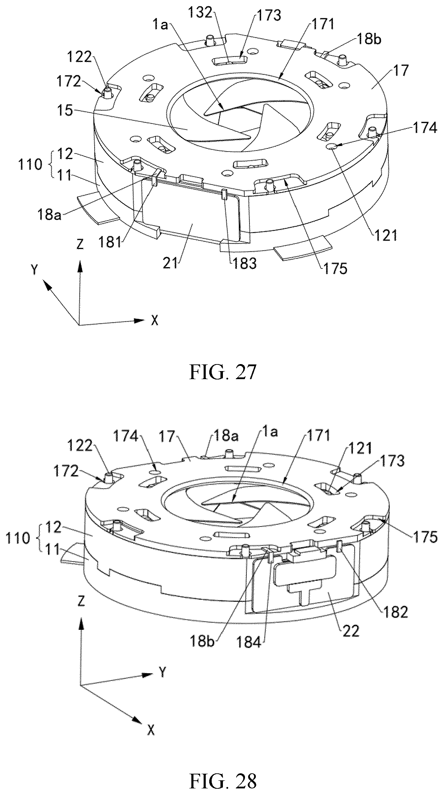

FIG. 27 is a diagram of a partial structure of the variable-aperture stop 1 shown in FIG. 3. FIG. 28 is a diagram of a structure of the structure shown in FIG. 27 from another perspective.

As shown in FIG. 27 and FIG. 28, the cover 17 may be fastened to a surface, away from the base 11, of the stationary bracket 12, namely, the top surface of the stationary base 110. In this case, the second light transmission hole 171 may be arranged opposite to the aperture hole 1a enclosed by the plurality of blades 15, and communicate with the aperture hole 1a. The plurality of stationary pillars 122 of the stationary bracket 12 may pass through the plurality of second fastening holes 172 of the cover 17 in a one-to-one correspondence. The plurality of stationary pillars 122 may be further located in the plurality of fastening slots 175 of the cover 17 in a one-to-one correspondence. In this way, based on fitting between the second fastening hole 172 of the cover 17 and the stationary pillar 122 of the stationary bracket 12, the cover 17 is unlikely to shake on the X-Y plane. For example, the stationary pillar 122 of the stationary bracket 12 may be melted by using a hot riveting technique, to be fastened in the second fastening hole 172 of the cover 17. In this case, the stationary pillar 122 may be further connected to a bottom wall of the fastening slot 175 of the cover 17.

For example, the plurality of rotating pillars 121 of the stationary bracket 12 may further pass through the plurality of second avoidance holes 174 of the cover 17 in a one-to-one correspondence. In this way, the cover 17 does not affect rotation of the rotating pillar 121. The plurality of guide pillars 132 of the rotating bracket 13 may pass through the plurality of first avoidance holes 173 of the cover 17 in a one-to-one correspondence. In this way, the cover 17 does not affect movement of the guide pillar 132.

For example, the first end 181 of the first electrical sub-connector 18a may be welded to the first circuit board 21, the second end 182 of the first electrical sub-connector 18a may be welded to the second circuit board 22, the first end 183 of the second electrical sub-connector 18b may be welded to the first circuit board 21, and the second end 184 of the second electrical sub-connector 18b may be welded to the second circuit board 22. In this case, an output end of the second coil 20a may be electrically connected to the first circuit board 21 through the second circuit board 22 and the first electrical sub-connector 18a, and an input end of the second coil 20a may be electrically connected to the first circuit board 21 through the second circuit board 22 and the second electrical sub-connector 18b. The first circuit board 21, the first electrical sub-connector 18a, the second circuit board 22, and the second electrical sub-connector 18b may form a current loop. In other words, the first circuit board 21 and the second circuit board 22 may be connected in series through the first electrical sub-connector 18a and the second electrical sub-connector 18b.

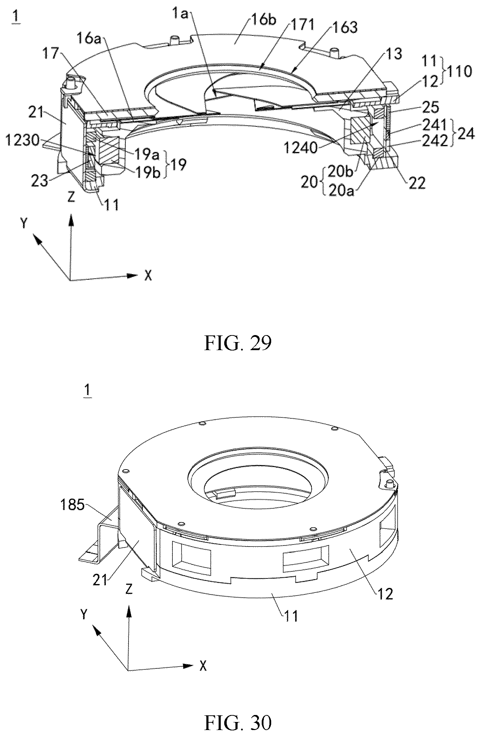

FIG. 29 is a cross-sectional view of the variable-aperture stop 1 shown in FIG. 3 at a line B-B according to an implementation.

As shown in FIG. 29, the second gasket 16b may be in a ring shape. The second gasket 16b may have a third light transmission hole 163. The second gasket 16b may be fastened to a surface, away from the rotating bracket 13, of the cover 17. In this case, the third light transmission hole 163 may be arranged opposite to the second light transmission hole 171 of the cover 17, and communicate with the second light transmission hole 171. For example, the third light transmission hole 163 and the second light transmission hole 171 may have same shapes and sizes. In this way, the second gasket 16b may block a hole feature on the surface of the cover 17, to prevent impurities such as dust from entering the variable-aperture stop 1 and affecting operation of the variable-aperture stop 1. This helps extend service life of the variable-aperture stop 1.

The foregoing specifically describes a structure of the variable-aperture stop 1 with reference to related accompanying drawings. The variable-aperture stop 1 in this application may further resolve some technical problems of a conventional variable-aperture stop. Details are described as follows.

First, compared with a conventional variable-aperture stop in which a long flexible circuit board is fastened to an outer surface of a stationary base in an encircling manner, in the variable-aperture stop 1 in this implementation, two independent circuit boards (to be specific, the first circuit board 21 and the second circuit board 22 in this implementation) are fastened to the periphery surface of the stationary base 110 at a spacing, the first drive mechanism 19 is electrically connected to the first circuit board 21, and the second drive mechanism 20 is electrically connected to the second circuit board 22, so that a current loop can be formed between the first circuit board 21 and the second circuit board 22 through the first electrical sub-connector 18a and the second electrical sub-connector 18b. In this way, the two independent circuit boards can simultaneously control two coils (to be specific, the first coil 19a and the second coil 20a in this implementation) to operate, to drive the rotating bracket 13 to rotate relative to the stationary base 110, and drive the plurality of blades 15 to rotate to adjust a size of the aperture hole 1a, so that the aperture of the aperture hole 1a of the variable-aperture stop 1 continuously changes between a plurality of levels. It can be understood that, on one hand, with this circuit arrangement, difficulty in assembling circuit boards (to be specific, the first circuit board 21 and the second circuit board 22 in this implementation) in the variable-aperture stop 1 is greatly reduced. This helps ensure consistency of the circuit boards in terms of shapes, positioning, and bonding strength. In addition, production efficiency can be further improved. This facilitates mass production of a product. On the other hand, areas of the circuit boards in the variable-aperture stop 1 in this implementation are much less than an area of a circuit board in the conventional variable-aperture stop. This greatly reduces manufacturing costs of the variable-aperture stop 1. The areas occupied by the first circuit board 21 and the second circuit board 22 on the peripheral surface of the stationary base 110 are less than half of the area of the peripheral surface of the stationary base 110.

In addition, in this implementation, the first electrical sub-connector 18a and the second electrical sub-connector 18b are further arranged to be electrically connected between the first circuit board 21 and the second circuit board 22, so that a current loop can be formed between the first circuit board 21 and the second circuit board 22 through the first electrical sub-connector 18a and the second electrical sub-connector 18b. In this way, the drive chip 23 can control both a current input to the first drive mechanism 19 and a current input to the second drive mechanism 20.

In addition, in the variable-aperture stop 1 in this implementation, the first electrical sub-connector 18a and the second electrical sub-connector 18b are further embedded in the cover 17. The cover 17 may be made of a plastic material. The first electrical sub-connector 18a, the second electrical sub-connector 18b, and the cover 17 may be integrated by using an injection molding technique. In this way, mounting of the first electrical sub-connector 18a and the second electrical sub-connector 18b is simple. In addition, compared with a conventional variable-aperture stop in which a cover 17 is made of a metal material, in this implementation, the cover 17 is made of a plastic material. This helps reduce manufacturing costs and implement mass production.

In addition, in the variable-aperture stop 1 in this implementation, relative positions of the magnetic-attractive piece 24 and the second magnet 20b are changed, or a shape of the magnetic-attractive piece 24 is changed, so that one magnetic-attractive piece 24 can generate both the first attraction force and the second attraction force for the second magnet 20b. In this way, based on an interaction force between the magnetic-attractive piece 24 and the second magnet 20b, displacement or shaking of the rotating bracket 13 in the stationary base 110 along the Z axis under impact of a gravity pillarure difference can be effectively avoided during operation of the variable-aperture stop 1, and displacement or shaking of the rotating bracket 13 in the stationary base 110 on the X-Y plane under impact of a gap tolerance between the rotating bracket 13 and the stationary base 110 on the X-Y plane can also be avoided, so that imaging quality of the entire lens assembly 100 is improved.

In addition, in the variable-aperture stop 1 in this implementation, based on the arrangement of the magnetic-attractive piece 24, the ball 14 is further disposed on a side, close to the magnetic-attractive piece 24, of the rotating bracket 13, so that only two balls 14 need to be disposed in the variable-aperture stop 1 to implement rotation between the rotating bracket 13 and the stationary base 110. This greatly reduces a quantity of balls 14 in the variable-aperture stop 1, and therefore can effectively reduce manufacturing costs of the variable-aperture stop 1, and can also reduce a risk of position limiting and unsmoothness that occur in a conventional variable-aperture stop provided with a plurality of balls 14.

In addition, in the variable-aperture stop 1 in this implementation, when the first magnet 19b and the second magnet 20b jointly drive the rotating bracket 13 to rotate, because the first magnet 19b and the second magnet 20b are symmetric to each other relative to the center of the rotating bracket 13, acting forces applied by the first magnet 19b and the second magnet 20b to different positions on the rotating bracket 13 are also balanced. In this way, the rotating bracket 13 is unlikely to tilt due to unbalanced forces.

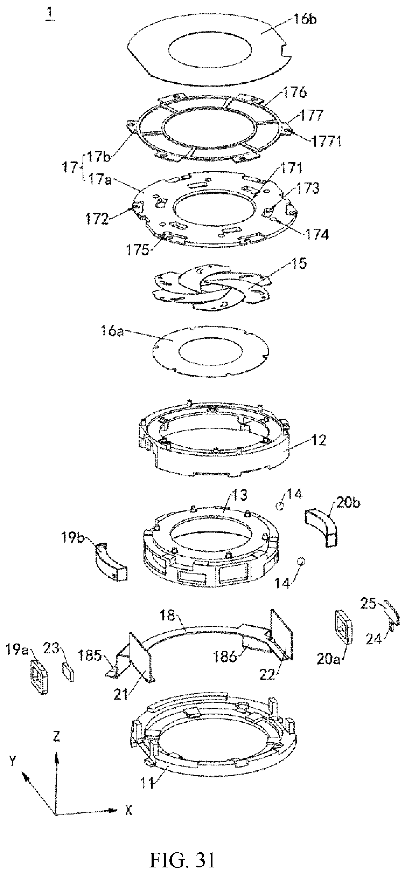

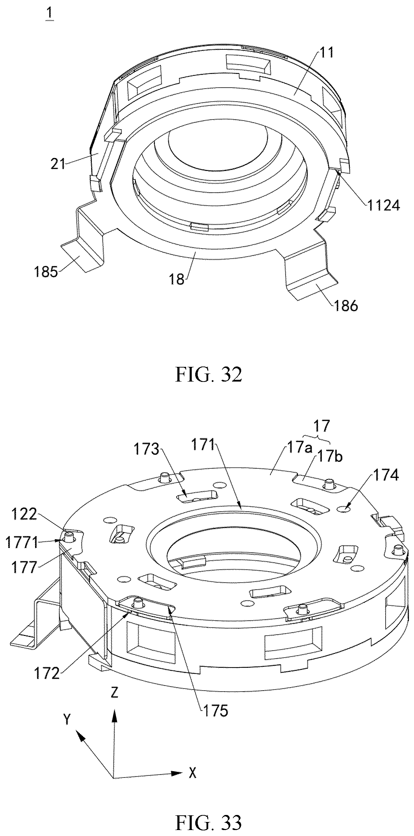

FIG. 30 is a diagram of a structure of the variable-aperture stop 1 shown in FIG. 3 according to another implementation. FIG. 31 is a schematic exploded view of a structure of the variable-aperture stop 1 shown in FIG. 30 according to an implementation. FIG. 32 is a diagram of a structure of the variable-aperture stop 1 shown in FIG. 30 from another perspective.

In a second implementation, technical content that is the same as that in the first implementation is not described in detail again. As shown in FIG. 30 to FIG. 32, the electrical connector 18 may alternatively be a circuit board. The electrical connector 18 may be a flexible circuit board, a rigid circuit board, or a rigid-flexible circuit board. For example, the electrical connector 18 may be fastened in the position-limiting slot 1125 of the base 11. One end of the electrical connector 18 may be electrically connected to the first circuit board 21. The other end of the electrical connector 18 may be electrically connected to the second circuit board 22. In this case, both the input end and the output end of the second coil 20a may be electrically connected to the first circuit board 21 through the second circuit board 22 and the electrical connector 18. A current loop may be formed between the first circuit board 21, the electrical connector 18, and the second circuit board 22. In other words, the first circuit board 21 and the second circuit board 22 may be electrically connected to each other through the electrical connector 18.

For example, the first circuit board 21 may not include the connection portion 212, the first extension portion 213, or the second extension portion 214. The electrical connector 18 may include a first pin 185 and a second pin 186 that are spaced apart. The first pin 185 and the second pin 186 may extend out relative to the base 11. The first pin 185 and the second pin 186 may be configured to electrically connect to a device outside the variable-aperture stop 1.

In some implementations, the electrical connector 18, the first circuit board 21, and the second circuit board 22 may alternatively be an integral structure. In other words, the electrical connector 18, the first circuit board 21, and the second circuit board 22 may be a whole circuit board.

It can be understood that, compared with a conventional variable-aperture stop in which a long flexible circuit board is fastened to an outer surface of a stationary base in an encircling manner, in the variable-aperture stop 1 in this implementation, two independent circuit boards (to be specific, the first circuit board 21 and the second circuit board 22 in this implementation) are fastened to an outer surface of the stationary base 110 at a spacing, and the electrical connector 18 is arranged to be separately electrically connected to the first circuit board 21 and the second circuit board 22, so that a current loop can be formed between the first circuit board 21 and the second circuit board 22 through the electrical connector 18. The two independent circuit boards can simultaneously control two coils (to be specific, the first coil 19a and the second coil 20a in this implementation) to operate, to drive the rotating bracket 13 to rotate relative to the stationary base 110, and drive the plurality of blades 15 to rotate to adjust a size of the aperture hole 1a, so that the aperture of the aperture hole 1a of the variable-aperture stop 1 continuously changes between a plurality of levels. On one hand, with this circuit arrangement, difficulty in assembling circuit boards (to be specific, the first circuit board 21 and the second circuit board 22 in this implementation) in the variable-aperture stop 1 is greatly reduced. This helps ensure consistency of the circuit boards in terms of shapes, positioning, and bonding strength. In addition, production efficiency can be further improved. This facilitates mass production of a product. On the other hand, areas of the circuit boards in the variable-aperture stop 1 in this implementation are much less than an area of a circuit board in the conventional variable-aperture stop. This greatly reduces manufacturing costs of the variable-aperture stop 1. The areas occupied by the first circuit board 21 and the second circuit board 22 on the peripheral surface of the stationary base 110 are less than half of the area of the peripheral surface of the stationary base 110.

In another implementation, the electrical connector 18 may alternatively be another component that can implement an electrical connection.

FIG. 33 is a diagram of a partial structure of the variable-aperture stop 1 shown in FIG. 30.

As shown in FIG. 31 and FIG. 33, in some implementations, the cover 17 may include a first part 17a and a second part 17b. The first part 17a may be made of a plastic material. The second part 17b may be made of a metal material. For example, the first part 17a may be provided with a second light transmission hole 171, a plurality of second fastening holes 172 that are spaced apart, a plurality of first avoidance holes 173 that are spaced apart, a plurality of second avoidance holes 174 that are spaced apart, and a plurality of fastening slots 175 that are spaced apart. Technical content related to the second light transmission hole 171, the first avoidance hole 173, and the second avoidance hole 174 is the same as that in the first implementation. Details are not described herein again.

For example, the second part 17b may include a body portion 176 and a plurality of fastening portions 177 that are spaced apart. The body portion 176 may be in a ring shape. All of the plurality of fastening portions 177 may be connected to a periphery of the body portion 176 and disposed around the body portion 176. A quantity of fastening portions 177 may be the same as a quantity of second fastening holes 172 of the first part 17a. The second part 17b may be embedded in the first part 17a. In this case, the body portion 176 of the second part 17b may be disposed around the second light transmission hole 171 of the first part 17a. The plurality of fastening portions 177 of the second part 17b may be located in the plurality of fastening slots 175 of the first part 17a in a one-to-one correspondence. In this implementation, there may be six fastening portions 177. FIG. 31 shows the body portion 176 and the plurality of fastening portions 177 of the second part 17b by using dashed lines. The following uses one fastening portion 177 as an example for description.

For example, the fastening portion 177 may be provided with a third fastening hole 1771. The third fastening hole 1771 of the fastening portion 177 may be arranged opposite to and communicate with a corresponding second fastening hole 172 of the first part 17a. The stationary pillar 122 of the stationary bracket 12 may sequentially pass through the second fastening hole 172 of the first part 17a and the third fastening hole 1771 of the fastening portion 177. When the stationary pillar 122 of the stationary bracket 12 is melted by using a hot riveting technique, the stationary pillar 122 may be fastened in the third fastening hole 1771. In this case, the stationary pillar 122 may be further connected to a surface, away from the first part 17a, of the fastening portion 177 of the second part 17b, where the surface is a metal surface. In this way, the first part 17a of the cover 17 can be effectively prevented from being melted and deformed due to high temperature during hot riveting, and a structural defect is avoided. This helps improve structural stability of the variable-aperture stop 1.

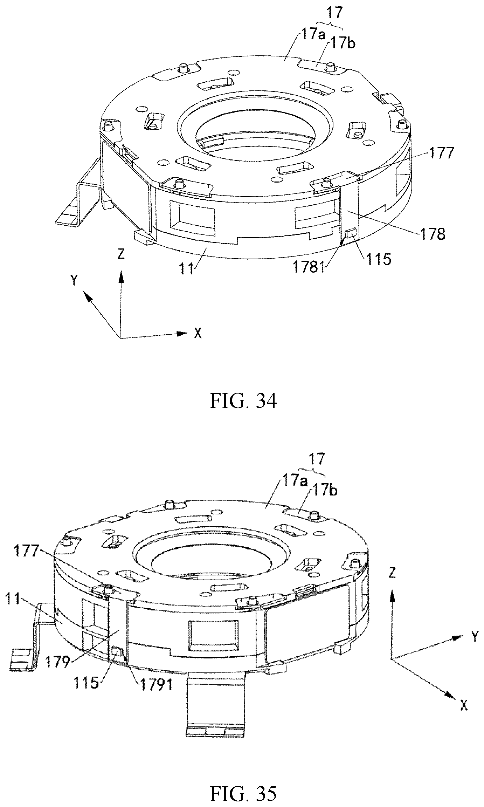

FIG. 34 is a diagram of a structure of a partial structure of the variable-aperture stop 1 shown in FIG. 33 according to another implementation. FIG. 35 is a diagram of a structure of the structure shown in FIG. 34 from another perspective.

As shown in FIG. 34 and FIG. 35, a structure of the variable-aperture stop 1 in this implementation is approximately the same as the structure of the variable-aperture stop 1 shown in FIG. 33. A same part is not described in detail again. A difference lies in that the second part 17b of the cover 17 in this implementation may further include a first branch 178 and a second branch 179. One end of the first branch 178 may be connected to an edge part of one fastening portion 177. The other end of the first branch 178 may be bent along the negative direction of the Z axis and extend to the base 11. One end of the second branch 179 may be connected to an edge part of one fastening portion 177. The other end of the second branch 179 may be bent along the negative direction of the Z axis and extend to the base 11. The other end of the second branch 179 may be fastened to an outer peripheral surface of the base 11. The first branch 178 and the second branch 179 may be spaced apart.

For example, two position-limiting blocks 115 may be disposed on the outer peripheral surface of the base 11. The two position-limiting blocks 115 may be spaced apart. A first connection hole 1781 may be provided at an end, away from the fastening portion 177, of the first branch 178. The first connection hole 1781 may be clamped with one position-limiting block 115 of the base, to fasten the first branch 178 to the base. A second connection hole 1791 may be provided at an end, away from the fastening portion 177, of the second branch 179. The second connection hole 1791 may be clamped with the other position-limiting block 115 of the base, to fasten the second branch 179 to the base. In this way, based on fitting between the cover 17 and the base 11, displacement or shaking of a component in the variable-aperture stop 1 along the Z-axis direction can be effectively avoided. In addition, components of the variable-aperture stop 1 can be further connected more compactly. This helps improve overall structural stability of the variable-aperture stop 1.

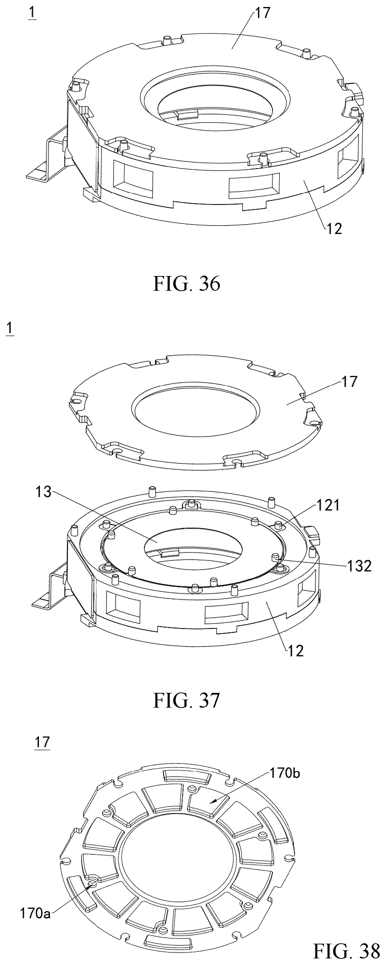

FIG. 36 is a diagram of a structure of the variable-aperture stop 1 shown in FIG. 30 according to another implementation. FIG. 37 is a partial schematic exploded view of a structure of the variable-aperture stop 1 shown in FIG. 36. FIG. 38 is a diagram of a structure of the cover 17 of the variable-aperture stop 1 shown in FIG. 36 according to an implementation.

As shown in FIG. 36 to FIG. 38, a structure of the variable-aperture stop 1 in this implementation is approximately the same as the structure of the variable-aperture stop 1 shown in FIG. 30. A same part is not described in detail again. A difference lies in that the variable-aperture stop 1 in this implementation may not include the second gasket. The cover 17 may be a whole structure. To be specific, the cover 17 may not include the first part or the second part. The cover 17 may not be provided with the plurality of first avoidance holes 173 that are spaced apart or the plurality of second avoidance holes 174 that are spaced apart.

For example, the cover 17 may be made of a metal material, for example, an aluminum alloy material. The cover 17 may be provided with a plurality of first avoidance grooves 170a. Openings of the plurality of first avoidance grooves 170a may be formed on a bottom surface of the cover 17. The plurality of first avoidance grooves 170a may be configured to accommodate the plurality of rotating pillars 121 of the stationary bracket 12. The cover 17 may be further provided with a plurality of second avoidance grooves 170b. Openings of the plurality of second avoidance grooves 170b may be formed on the bottom surface of the cover 17. The plurality of second avoidance grooves 170b may be configured to accommodate the plurality of guide pillars 132 of the rotating bracket 13.

It should be noted that implementations of this application or features in implementations may be combined with each other if there is no conflict, and any combination of features in different implementations also falls within the protection scope of this application. In other words, the plurality of implementations described above may alternatively be combined according to an actual requirement.

It should be noted that all of the foregoing accompanying drawings are example drawings of this application, and do not represent actual sizes of products. In addition, a size proportion relationship between components in the accompanying drawings is not intended to limit an actual product in this application.

The foregoing descriptions are merely some embodiments and implementations of this application, but are not intended to limit the protection scope of this application. Any variation or replacement readily figured out by a person skilled in the art within the technical scope disclosed in this application shall fall within the protection scope of this application. Therefore, the protection scope of this application shall be subject to the protection scope of the claims.

## Claims

1. A variable-aperture stop (1), comprising a stationary base (110), a rotating bracket (13), a first circuit board (21), a second circuit board (22), a first drive mechanism (19), a second drive mechanism (20), and a plurality of blades (15), wherein the rotating bracket (13) is rotatably connected to the stationary base (110), a part of the blade (15) is connected to the stationary base (110), a part of the blade (15) is connected to the rotating bracket (13), and the plurality of blades (15) together enclose an aperture hole (1a);
the first circuit board (21) and the second circuit board (22) are fastened to a peripheral surface of the stationary base (110) at a spacing, the first drive mechanism (19) is electrically connected to the first circuit board (21), and the second drive mechanism (20) is electrically connected to the second circuit board (22); and
the first drive mechanism (19) and the second drive mechanism (20) are configured to drive the rotating bracket (13) to rotate relative to the stationary base (110), and the rotating bracket (13) drives the plurality of blades (15) to rotate, to change an aperture of the aperture hole (1a).

2. The variable-aperture stop (1) according to claim 1, wherein areas occupied by the first circuit board (21) and the second circuit board (22) on the peripheral surface of the stationary base (110) are less than half of an area of the peripheral surface of the stationary base (110).

3. The variable-aperture stop (1) according to claim 1 or 2, wherein the peripheral surface of the stationary base (110) comprises a first plane (110a), a first curved surface (110b), a second plane (110c), and a second curved surface (110d) that are sequentially connected, the first circuit board (21) is fastened to the first plane (110a), the second circuit board (22) is fastened to the second plane (110c), areas occupied by the first circuit board (21) and the second circuit board (22) on the first curved surface (110b) and the second curved surface (110d) are less than half of a total area of the first curved surface (110b) and the second curved surface (110d).

4. The variable-aperture stop (1) according to any one of claims 1 to 3, wherein the first drive mechanism (19) comprises a first coil (19a) and a first magnet (19b), the first coil (19a) is electrically connected to the first circuit board (21), the second drive mechanism (20) comprises a second coil (20a) and a second magnet (20b), the second coil (20a) is electrically connected to the second circuit board (22), the first magnet (19b) and the second magnet (20b) are fastened to the rotating bracket (13) at a spacing, the first magnet (19b) is disposed opposite to the first coil (19a), and the second magnet (20b) is disposed opposite to the second coil (20a).

5. The variable-aperture stop (1) according to claim 4, wherein the variable-aperture stop (1) further comprises an electrical connector (18), the electrical connector (18) is electrically connected between the first circuit board (21) and the second circuit board (22), and an output end of the second coil (20a) and an input end of the second coil (20a) are electrically connected to the first circuit board (21) through the second circuit board (22) and the electrical connector (18).

6. The variable-aperture stop (1) according to claim 5, wherein the electrical connector (18) is a metal terminal, the electrical connector (18) comprises a first electrical sub-connector (18a) and a second electrical sub-connector (18b), the first electrical sub-connector (18a) is electrically connected between the first circuit board (21) and the second circuit board (22), and the second electrical sub-connector (18b) is electrically connected between the first circuit board (21) and the second circuit board (22); and
the output end of the second coil (20a) is electrically connected to the first circuit board (21) through the second circuit board (22) and the first electrical sub-connector (18a), and the input end of the second coil (20a) is electrically connected to the first circuit board (21) through the second circuit board (22) and the second electrical sub-connector (18b).

7. The variable-aperture stop (1) according to claim 6, wherein the variable-aperture stop (1) further comprises a cover (17), the cover (17) is fastened to a top surface of the stationary base (110), and at least a part of the first electrical sub-connector (18a) and at least a part of the second electrical sub-connector (18b) are embedded in the cover (17).

8. The variable-aperture stop (1) according to claim 7, wherein the cover (17) is made of a plastic material.

9. The variable-aperture stop (1) according to claim 7, wherein the cover (17) comprises a first part (17a) and a second part (17b), the first part (17a) is fastened to the top surface of the stationary base (110), the first part (17a) comprises a plurality of fastening slots (175) that are spaced apart, the plurality of fastening slots (175) are arranged around a periphery of the first part (17a), the second part (17b) comprises a body portion (176) and a plurality of fastening portions (177) that are spaced apart, the plurality of fastening portions (177) are all connected to edges of the body portion (176) and are arranged around the body portion (176), the body portion (176) of the second part (17b) is embedded in the first part (17a), and the plurality of fastening portions (177) of the second part (17b) are located in the plurality of fastening slots (175) of the first part (17a) in a one-to-one correspondence; and
the first electrical sub-connector (18a) and the second electrical sub-connector (18b) are both embedded in the first part (17a), and are spaced away from the second part (17b).

10. The variable-aperture stop (1) according to claim 9, wherein the first part (17a) is made of a plastic material, and the second part (17b) is made of a metal material.

11. The variable-aperture stop (1) according to any one of claims 6 to 10, wherein the first circuit board (21) comprises a main body portion (211), a connection portion (212), a first extension portion (213), and a second extension portion (214), the main body portion (211) is connected to the connection portion (212), the main body portion (211) is fastened to the peripheral surface of the stationary base (110), the connection portion (212) is fastened to a bottom surface of the stationary base (110), the first extension portion (213) is connected to the connection portion (212) and extends out relative to the stationary base (110), and the second extension portion (214) is connected to the connection portion (212) and extends out relative to the stationary base (110); and
the first extension portion (213) and the second extension portion (214) are configured to electrically connect to an external device.

12. The variable-aperture stop (1) according to claim 5, wherein the electrical connector (18) is a circuit board, and the electrical connector (18) is fastened to a bottom surface of the stationary base (110).

13. The variable-aperture stop (1) according to claim 12, wherein the electrical connector (18) comprises a first pin (185) and a second pin (186), the first pin (185) and the second pin (186) both extend out relative to the stationary base (110), and the first pin (185) and the second pin (186) are configured to electrically connect to an external device.

14. The variable-aperture stop (1) according to claim 12 or 13, wherein the variable-aperture stop (1) further comprises a cover (17), the cover (17) comprises a first part (17a) and a second part (17b), the first part (17a) is fastened to a top surface of the stationary base (110), the first part (17a) comprises a plurality of fastening slots (175) that are spaced apart, and the plurality of fastening slots (175) are arranged around a periphery of the first part (17a); and
the second part (17b) comprises a body portion (176) and a plurality of fastening portions (177) that are spaced apart, the plurality of fastening portions (177) are all connected to edges of the body portion (176) and are arranged around the body portion (176), the body portion (176) of the second part (17b) is embedded in the first part (17a), and the plurality of fastening portions (177) of the second part (17b) are located in the plurality of fastening slots (175) of the first part (17a) in a one-to-one correspondence.

15. The variable-aperture stop (1) according to any one of claims 4 to 14, wherein the variable-aperture stop (1) further comprises a magnetic-attractive piece (24), the magnetic-attractive piece (24) is fastened to the second circuit board (22), the magnetic-attractive piece (24) generates a first attraction force along a first direction and a second attraction force along a second direction for the second magnet (20b), the first direction is a thickness direction of the variable-aperture stop (1), and the second direction is a radial direction along which the second magnet (20b) of the variable-aperture stop (1) is located.

16. The variable-aperture stop (1) according to claim 15, wherein a part of a projection of the magnetic-attractive piece (24) on a reference plane coincides with a projection of the second magnet (20b) on the reference plane, a part of the projection of the magnetic-attractive piece (24) on the reference plane is located on a bottom side of the projection of the second magnet (20b) on the reference plane, and the reference plane is parallel to an optical-axis direction of the variable-aperture stop (1).

17. The variable-aperture stop (1) according to claim 16, wherein the magnetic-attractive piece (24) comprises a horizontal part (241) and a vertical part (242), the vertical part (242) is connected to a bottom surface of the horizontal part (241), a projection of the horizontal part (241) on the reference plane at least partially overlaps with the projection of the second magnet (20b) on the reference plane, and a projection of the vertical part (242) on the reference plane is at least partially located on the bottom side of the projection of the second magnet (20b) on the reference plane.

18. The variable-aperture stop (1) according to any one of claims 1 to 17, wherein the variable-aperture stop (1) further comprises a plurality of balls (14), and the plurality of balls (14) are all rotatably connected to the stationary base (110) and rollably connected to the rotating bracket (13).

19. The variable-aperture stop (1) according to any one of claims 15 to 17, wherein the variable-aperture stop (1) further comprises at least two balls (14), the plurality of balls (14) are all rotatably connected to the stationary base (110) and rollably connected to the rotating bracket (13), and the plurality of balls (14) are all located on a side, close to the magnetic-attractive piece (24), of the rotating bracket (13).

20. A lens assembly (100), comprising a camera module (2) and the variable-aperture stop (1) according to any one of claims 1 to 19, wherein the variable-aperture stop (1) is located on a light entrance side of the camera module (2), and the variable-aperture stop (1) is configured to adjust luminous flux of ambient light that enters the camera module (2).

21. An electronic device, comprising a device housing (200) and the lens assembly (100) according to claim 20, wherein the lens assembly (100) is disposed on an inner side of the device housing (200).
